(19) Europäisches Patentamt
European Patent Office
Office européen des brevets

(11) **EP 2 706 389 A2**

(12) **EUROPEAN PATENT APPLICATION**

(43) Date of publication:
**12.03.2014 Bulletin 2014/11**

(51) Int Cl.:
**G02B 6/35** (2006.01)

(21) Application number: **13183299.0**

(22) Date of filing: **06.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.09.2012 JP 2012197857**
**09.07.2013 JP 2013143593**

(71) Applicant: **Furukawa Electric Co., Ltd.**
**Chiyoda-ku**
**Tokyo 100-8322 (JP)**

(72) Inventors:
• **Iwama, Masaki**
**Tokyo, 100-8322 (JP)**
• **Kagi, Nobuyuki**
**Tokyo, 100-8322 (JP)**
• **Oguri, Atsushi**
**Tokyo, 100-8322 (JP)**

(74) Representative: **Schwabe - Sandmair - Marx**
**Patentanwälte**
**Stuntzstraße 16**
**81677 München (DE)**

(54) **Optical Switch**

(57) An optical switch (10) includes light input/output ports (1,2), each having a port group (110,120) of inputting/outputting a light, an optical path manipulation unit (5) having optical path switching units (5a,5b,5c) of switching an optical path of a light from an input port in the port group to an optical path toward an output port in the same port group according to each of the light input/output ports, and a condenser lens (6) condensing light from the light input/output ports on the optical path switching units corresponding to the port groups and optically-couples the light input/output ports with the optical path manipulation unit. The input/output optical paths of the light input/output ports with respect to the condenser lens are parallel to each other between the ports in the same port group and are unparallel to each other between the ports in the different port groups as seen from a direction perpendicular to a port arrangement direction.

FIG.1

EP 2 706 389 A2

**Description**

Field

The present invention relates to an optical switch.

Background

In the related art, in an optical transmission system, optical switches for switching an optical path of a signal light have been used. The optical switch generally includes, as an optical path switching unit of switching the optical path of the signal light, a reflecting mirror (hereinafter, referred to as an MEMS mirror) formed by using a MEMS (Micro Electro Mechanical Systems) technique or an LCOS (Liquid Crystal On Silicon). The MEMS mirror is supported so as to be rotatable around a predetermined rotation axis, and the rotation angle is adjusted by a driving mechanism. The optical switch having the MEMS mirror implements an optical switch operation by allowing the MEMS mirror to reflect the signal light incident from an optical path and outputting the reflected signal light to a specific optical path. On the other hand, the LCOS is a spatial light modulator which modulates a phase of incident light by using liquid crystal to diffract the light. The optical switch having the LCOS implements an optical switch operation by allowing the LCOS to diffract the signal light incident from an optical path and outputting the signal light to a specific optical path.

In addition, in the related art of the above-described optical switch, for example, disclosed is a wavelength selective switch where a WDM signal light where signal lights having different wavelengths are wavelength-division-multiplexed is input and optical paths of the signal lights included in the WDM signal light ray are switched according to the wavelengths (referred to Patent Literature 1). Patent Literature 1 discloses a wavelength selective switch where optical fiber ports which input or output signal lights are one-dimensionally arranged and a wavelength selective switch where optical fiber ports are two-dimensionally arranged to increase the number of optical fiber ports. On the other hand, disclosed is a wavelength selective switch, a so-called 2-in-1 wavelength selective switch, where two different wavelength selective switch functions are included in one apparatus (referred to US Patent Patent Literature 2).

An optical communication system has been developed from a point-to-point type to a ring type or mesh type network system according to improvement of optical transmission technique. An optical switch for inputting and outputting an arbitrary signal light to an arbitrary port to arbitrarily change an optical path of the signal light is needed at a node of the above-described optical network. Particularly, in the case of using a WDM signal light, there is a need for a wavelength selective switch capable of arbitrarily changing an optical path with respect to a signal light having an arbitrary wavelength. Recently, according to a great increase in size of an optical network, the number of light input/output ports of the optical switch including the wavelength selective switch is further required to be increased.

Citation List

Patent Literature

Patent Literature 1: Japanese Patent Application Laid-open No. 2011-65023
Patent Literature 2: US Patent No. 7,769,255

Summary

Technical Problem

In the above-described related art, as the number of ports of the optical switch is increased, it is difficult to avoid an increase in size of optical parts of the optical switch such as an optical path switching unit or a lens system, and thus, the size of the optical switch is increased and the cost is increased.

In addition, in the 2-in-1 wavelength selective switch disclosed in US Patent No. 7,769,255, in terms of optical switch operations, the signal light need to be divided according to an array of a light input/output port group to be condensed on the optical path switching unit. In order to implement this configuration, optical parts having particular optical characteristics and particular shapes need to be used. Since much time and cost are taken to prepare the particular optical parts, it is difficult to easily increase the number of light input/output ports while suppressing an increase in cost.

It is an object of the present invention to at least partially solve the problems in the conventional technology.

Solution to Problem

In accordance with one aspect of the present invention, an optical switch includes a plurality of light input/output ports, each of which has a port group of inputting or outputting a light, an optical path manipulation unit which has a plurality of optical path switching units of switching an optical path of a light input from an input port in the port group to an optical path toward an output port in the same port group according to each of the light input/output ports, and a condenser lens which condenses light input from the plurality of light input/output ports on the plurality of optical path switching units corresponding to the port groups and optically couples light input from the plurality of optical path switching units with the plurality of light input/output ports corresponding to the port groups. The input/output optical paths of the plurality of light input/output ports with respect to the condenser lens are parallel to each other between the ports in the same port group and are not parallel to each other between the ports in the different port groups as seen from a direction perpendicular to an arrangement direction of optical waveguides which are the ports in the port groups.

Advantageous Effects of Invention

According to the present invention, it is possible to obtain the effect that an optical switch capable of easily increasing the number of light input/output ports while suppressing an increase in size of the apparatus and an increase in cost can be provided.

Brief Description of Drawings

FIG. 1 is a schematic diagram illustrating a configuration example of an optical switch according to a first embodiment of the present invention;
FIG. 2 is a diagram illustrating the optical switch illustrated in FIG. 1 as seen from the positive direction in the X axis direction of an XYZ coordinate system;
FIG. 3 is a schematic diagram illustrating a configuration example of a plurality of optical path switching units in the first embodiment;
FIG. 4 is a schematic diagram illustrating a configuration example of an optical switch according to a second embodiment of the present invention;
FIG. 5 is a diagram illustrating the optical switch illustrated in FIG. 4 as seen from the positive direction in the X axis direction of the XYZ coordinate system;
FIG. 6 is a schematic diagram illustrating a configuration example of an optical switch according to a third embodiment of the present invention;
FIG. 7 is a diagram illustrating the optical switch illustrated in FIG. 6 as seen from the positive direction in the X axis direction of the XYZ coordinate system;
FIG. 8 is a schematic diagram illustrating a configuration example of an optical switch according to a fourth embodiment of the present invention;
FIG. 9 is a diagram illustrating the optical switch illustrated in FIG. 8 as seen from the positive direction in the X axis direction of the XYZ coordinate system;
FIG. 10 is a schematic diagram illustrating a configuration example of a plurality of optical path switching units in the fourth embodiment;
FIG. 11 is a schematic diagram illustrating a configuration example of an optical switch according to a fifth embodiment of the present invention;
FIG. 12 is a diagram illustrating the optical switch illustrated in FIG. 11 as seen from the positive direction in the X axis direction of the XYZ coordinate system;
FIG. 13 is a diagram illustrating comparison of beam spots of optical signals on a first plane of an anamorphic prism and a surface of an LCOS;
FIG. 14 is a diagram illustrating comparison of beam spots of optical signals on a first plane of an anamorphic prism and a surface of an LCOS;
FIG. 15 is a schematic diagram illustrating a configuration example of an optical switch according to a sixth embodiment of the present invention;
FIG. 16 is a diagram illustrating the optical switch illustrated in FIG. 15 as seen from the positive direction in the X axis direction of the XYZ coordinate system; and
FIG. 17 is a diagram illustrating an example of an anamorphic optical system where directions in which the interval between two optical planes is narrowed are arranged to be the same.

Description of Embodiment

Hereinafter, embodiments of an optical switch according to the present invention will be described in detail with reference to the drawings. The present invention is not limited to the embodiments. The drawings are schematically illustrated, and it should be noted that dimensional relationship between components and ratios of the components may be different from those of actual cases. The dimensional relationship between components and the ratios of the components may also be different among the figures of the drawings. In addition, in the figures, directions are indicated by appropriately using an XYZ coordinate system that is three-axis (X, Y, and Z axes) orthogonal coordinate system.

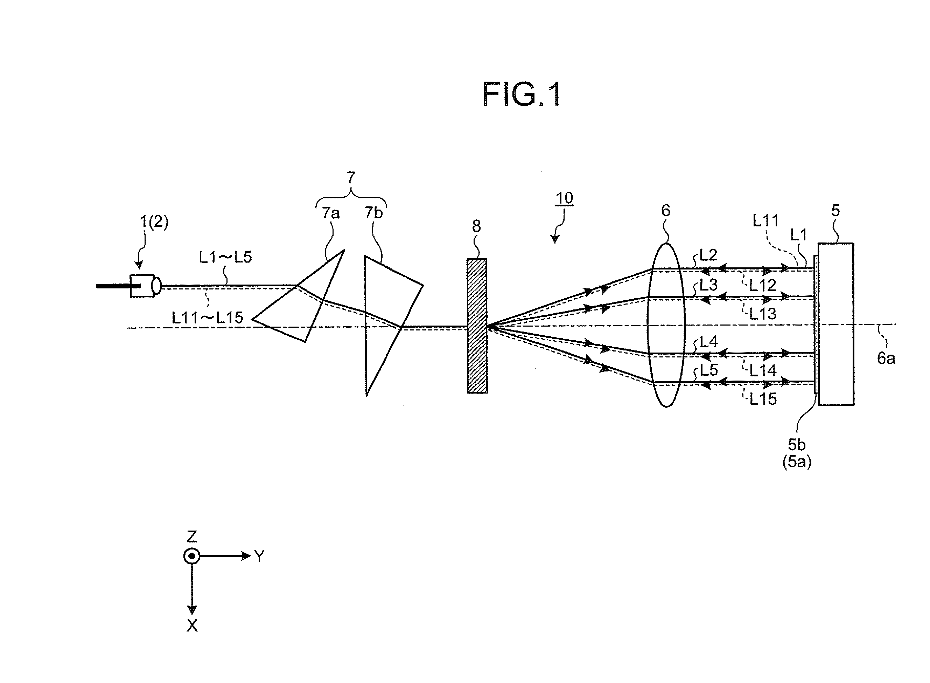

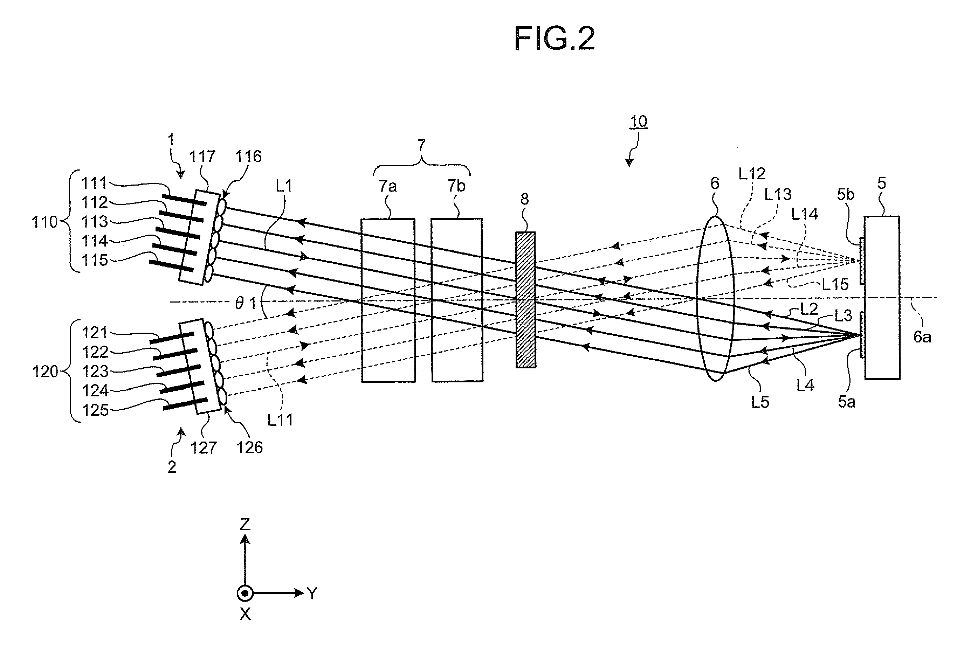

First, a configuration of an optical switch according to a first embodiment of the present invention will be described. FIG. 1 is a schematic diagram illustrating a configuration example of the optical switch according to the first embodiment of the present invention. In FIG. 1, the optical switch according to the first embodiment is illustrated as seen from the positive direction in the Z axis direction of the XYZ coordinate system. FIG. 2 is a diagram illustrating the optical switch illustrated in FIG. 1 as seen from the positive direction in the X axis direction of the XYZ coordinate system. As illustrated in FIGS. 1 and 2, an optical switch 10 is configured to include a plurality of light input/output ports 1 and 2, an optical path manipulation unit 5, a condenser lens 6, an anamorphic optical system 7, and a wavelength dispersion element 8. In addition, in the optical switch 10, since each of actual optical paths can be greatly bent at the wavelength dispersion element 8, the components from the anamorphic optical system 7 to the optical path manipulation unit 5 (in the first embodiment, the anamorphic optical system 7, the condenser lens 6, and the optical path manipulation unit 5) are arranged with angles before and after the wavelength dispersion element 8. However, in FIGS. 1 and 2, for the simplification, the components are arranged straightly along the optical path. This illustration is also the same in the other figures following FIGS. 1 and 2.

Each of the plurality of light input/output ports 1 and 2 is configured to include a port group of being input with light or outputting light, so that each port group is input with light from an external portion and outputs light to an external portion. More specifically, the light input/output port 1 is configured to include an optical fiber port group 110, a collimating lens group 116 including a plurality of collimating lenses, and a supporting portion 117 supporting the optical fiber port group 110 and the collimating lens group 116. The optical fiber port group 110 is a light input/output port group including a plurality of optical fiber ports 111 to 115. Each of the optical fiber ports 111 to 115 is configured by using an optical fiber functioning as an optical waveguide. Each of the optical fiber ports 111, 112, 113, 114, and 115 is arranged along a predetermined arrangement direction, that is, in a direction parallel to the YZ plane illustrated in FIG. 2 with a predetermined interval (for example, an equal interval).

The collimating lens group 116 is configured to include collimating lenses disposed corresponding to the optical fiber ports 111 to 115. The collimating lens group 116 has a function of forming the light ray output from each of the optical fiber ports 111 to 115 as a parallel light ray or a function of condenser the input parallel light ray to each of the optical fiber ports 111 to 115 to be coupled.

The light input/output port 2 is configured to include an optical fiber port group 120, a collimating lens group 126 including a plurality of collimating lenses, and a supporting portion 127 supporting the optical fiber port group 120 and the collimating lens group 126. The optical fiber port group 120 is a light input/output port group including a plurality of optical fiber ports 121 to 125. Each of the optical fiber ports 121 to 125 is configured by using an optical fiber functioning as an optical waveguide. Each of the optical fiber ports 121, 122, 123, 124, and 125 is arranged along a predetermined arrangement direction (direction parallel to the YZ plane illustrated in FIG. 2) with a predetermined interval, for example, an equal interval or the like.

The collimating lens group 126 is configured to include collimating lenses disposed corresponding to the optical fiber ports 121 to 125. The collimating lens group 126 has a function of forming the light ray output from each of the optical fiber ports 121 to 125 as a parallel light ray or a function of condenser the input parallel light ray to each of the optical fiber ports 121 to 125 to be coupled.

Herein, as illustrated in FIGS. 1 and 2, the light input/output ports 1 and 2 are arranged along the arrangement direction of the optical fiber port groups 110 and 120, that is, the Z axis direction. In the light input/output ports 1 and 2, the optical fiber port group 110 and the optical fiber port group 120 are grouped according to the light input/output ports 1 and 2 to be arranged on the same plane parallel to the YZ plane. The optical fiber ports 111 to 115 and 121 to 125 in the optical fiber port groups 110 and 120 are parallel to each other in the same group and are not parallel to each other in the different groups as seen from the direction perpendicular to the arrangement direction (that is, the X-axis direction illustrated in FIGS. 1 and 2). More specifically, as illustrated in FIG. 2, the optical fiber ports 111 to 115 included in the same optical fiber port group 110 are parallel to each other. In addition, the optical fiber ports 121 to 125 in the same optical fiber port group 120 are parallel to each other. On the other hand, as illustrated in FIG. 2, the optical fiber ports 111 to 115 and the optical fiber ports 121 to 125 between the different optical fiber port groups 110 and 120 are not parallel to each other and have a predetermined angle in the plane (in the YZ plane) parallel to the arrangement direction. For example, as illustrated in FIG. 2, the optical fiber port 115 in the optical fiber port group 110 is not parallel to the optical fiber ports 121 to 125 in the optical fiber port group 120 and has an angle θ1 with respect to the optical fiber ports 121 to 125 in the YZ plane. This configuration is also the same in the other optical fiber ports 111 to 114 and 121 to 125.

In addition, the above-described optical fiber ports 111 to 115 and 121 to 125 are configured so that each of the light input/output ports 1 and 2 is input with a light ray from an external portion or outputs a light ray to an external portion. The light ray input and output at each of the light input/output ports 1 and 2 in this manner is not particularly limited. For example, the light may be a signal light for optical communication in a wavelength range of 1520 nm to 1620 nm.

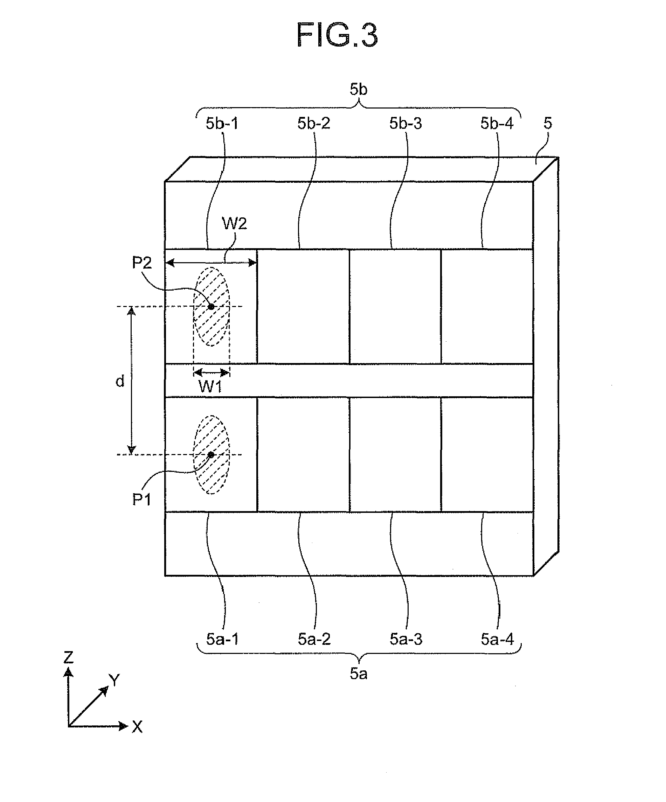

The optical path manipulation unit 5 is configured to include a plurality of optical path switching units 5a and 5b, each of which switches the optical path of the input light, to manipulate the optical path of the light reaching from the input port to the output port for each of the light input/output ports 1 and 2. As illustrated in FIG. 2, the optical path switching units 5a and 5b are arranged to be separated in the Z-axis direction for the different light input/output ports 1 and 2. FIG. 3 is a schematic diagram illustrating a configuration example of a plurality of the optical path switching units in the first embodiment. As illustrated in FIG. 3, the optical path switching unit 5a is configured to include a plurality of LCOSs 5a-1, 5a-2, 5a-3, and 5a-4 arranged along the X axis direction. Similarly, the optical path switching unit 5b is configured to include a plurality of LCOSs 5b-1, 5b-2, 5b-3, and 5b-4 arranged along the X axis direction. Each of the optical path switching units 5a and 5b having the above-described configuration switches the optical path of the light input from the input port in one of the optical fiber port groups 110 and 120 to the optical path toward the output port in the same optical fiber port group including the input port with respect to each of the light input/output ports 1 and 2.

Namely, each of the LCOSs 5a-1, 5a-2, 5a-3, and 5a-4 has a function of diffracting the light input from the input port in the optical fiber port group 110 of the light input/output port 1 and outputting the light toward the output port in the same optical fiber port group 110. In addition, each of the LCOSs 5b-1, 5b-2, 5b-3, and 5b-4 has a function of diffracting the light input from the input port in the optical fiber port group 120 of the light input/output port 2 and outputting the light toward the output port in the same optical fiber port group 120. In addition, the input port in the optical fiber port group 110 is any one of the optical fiber ports 111 to 115, and the output port in the optical fiber port group 110 is any one excluding the input port of the optical fiber ports 111 to 115. In addition, the input port in the optical fiber port group 120 is any one of the optical fiber ports 121 to 125, and the output port in the optical fiber port group 120 is any one excluding the input port of the optical fiber ports 121 to 125.

Herein, the lights input from the light input/output ports 1 and 2 to the optical path manipulation unit 5 are separated from each other in the Z-axis direction so as not to overlap each other at the above-described optical path switching units 5a and 5b. For example, as illustrated in FIG. 3, an imaging point P1 of the light input from the light input/output port 1 to the LCOS 5a-1 of the optical path switching unit 5a is sufficiently separated from an imaging point P2 of the light input from the light input/output port 2 to the LCOS 5b-1 of the optical path switching unit 5b. Namely, a separation distance (hereinafter, referred to as a separation distance d) between the imaging point P1 and the imaging point P2 is sufficiently large in comparison to the dimension of the beam spot (refer to a hatching portion of FIG. 3) of each light in the Z-axis direction. As a result, the interference with the light is avoided. This is the same with respect to the other LCOSs 5a-2 to 5a-4 and 5b-2 to 5b-4. The LCOSs 5a-1 to 5a-4 and 5b-1 to 5b-4 are arranged on the optical path manipulation unit 5 to correspond to the imaging points of the light from the light input/output ports 1 and 2.

In addition, the beam shapes of the lights input to the above-described LCOSs 5a-1 to 5a-4 and 5b-1 to 5b-4 are shaped to be in the elliptical shape that is reduced in the X-axis direction as illustrated in the hatching portion of FIG. 3 due to the below-described function of the anamorphic optical system 7. Each of widths W2 of the LCOSs 5a-1 to 5a-4 and 5b-1 to 5b-4 is sufficiently large in comparison to each of widths W1 of the lights having the elliptical shape.

The condenser lens 6 condenses the light input from the plurality of light input/output ports 1 and 2 on the plurality of optical path switching units 5a and 5b corresponding to the optical fiber port groups 110 and 120 and optically couples the light input from the plurality of optical path switching units 5a and 5b with the plurality of light input/output ports 1, and 2 corresponding to the optical fiber port groups 110 and 120. As a result, the plurality of light input/output ports 1 and 2 and the optical path manipulation unit 5 are optically coupled with each other by the condenser lens 6. More specifically, the condenser lens 6 is a lens having a single optical axis 6a and is arranged between the light input/output ports 1 and 2 and the optical path manipulation unit 5. The condenser lens 6 condenses the light from the optical fiber port group 110 on the one optical path switching unit 5a and condenses the light from the optical fiber port group 120 on the other optical path switching unit 5b. In addition, the condenser lens 6 optically couples the light from the optical path switching unit 5a with the one optical fiber port group 110 and optically couples the light from the optical path switching unit 5b with the other optical fiber port group 120. In any case, the condenser lens 6 condenses the light on the plane parallel to the Z-axis direction (for example, on the plane parallel to the YZ plane) as illustrated FIG. 2 and condenses the light on the plane parallel to the X-axis direction (for example, on the plane parallel to the XY plane) as illustrated FIG. 1. Herein, the Z-axis direction is the arrangement direction of the optical fiber port groups 110 and 120, and the X-axis direction is the direction perpendicular to the arrangement direction. In addition, it is preferable that the position of the focal point of the condenser lens 6 be substantially coincident with the position of the above-described optical path manipulation unit 5.

The anamorphic optical system 7 shapes the beam shapes of the lights input from the plurality of light input/output ports 1 and 2 to be in an elliptical shape. More specifically, the anamorphic optical system 7 is configured to include a pair of anamorphic prisms 7a and 7b (that is, an anamorphic prism pair) and is arranged between the light input/output ports 1 and 2 and the condenser lens 6. The anamorphic optical system 7 has a function of enlarging the beam shape of each of the light input from the light input/output ports 1 and 2 in the direction (that is, the X-axis direction) perpendicular to the arrangement direction of each of the optical fiber ports 111 to 115 and 121 to 125. In addition, the anamorphic optical system 7 shifts the optical path of each of the light from the light input/output ports 1 and 2 so that the optical path passes through the vicinity of the central portion of the wavelength dispersion element 8 as seen from the Z-axis direction (refer to FIG. 1). As illustrated by broken-line portions of FIG. 3, due to the function of the anamorphic optical system 7, the beam shapes of the lights from the light input/output ports 1 and 2 are shaped to be in an elliptical shape with the width W1 which is reduced in the X-axis direction when the light are condensed on the optical path switching units 5a and 5b. On the other hand, the anamorphic optical system 7 has a function of reducing the beam shape of the light input from the optical path manipulation unit 5 in the X-axis direction.

The wavelength dispersion element 8 disperses the lights input from the plurality of light input/output ports 1 and 2 according to the wavelength. More specifically, the wavelength dispersion element 8 is configured by using, for example, a transmission type diffraction grating or the like to disperse the light from the light input/output port 1 and the light from the light input/output port 2 in a wavelength dispersion direction according to the wavelength. Herein, the wavelength dispersion direction of the wavelength dispersion element 8 is the direction of the plane on which the optical paths of the lights dispersed according to the wavelength by the wavelength dispersion element 8 forms an angle. Namely, in FIG. 1, the wavelength dispersion direction is the direction which is substantially parallel to the X-axis direction and substantially perpendicular to the arrangement direction of each of the optical fiber ports 111 to 115 and 121 to 125 illustrated in FIG. 2. The wavelength dispersion element 8 is arranged between the anamorphic optical system 7 and the condenser lens 6 so that the incident light is dispersed in the arrangement direction of the LCOSs 5a-1 to 5a-4 and 5b-1 to 5b-4 according to the wavelength. In this case, it is preferable that the position of the wavelength dispersion element 8 be substantially coincident with the position of the focal point of the condenser lens 6. In addition, it is preferable that the central portion of the wavelength dispersion element 8 intersect the optical axis 6a of the condenser lens 6. For example, in the case where the wavelength dispersion element 8 is configured with a diffraction grating, the grooves may be formed in the direction substantially perpendicular to the optical axis 6a of the condenser lens 6.

In the optical switch 10 having the above-described configuration, for example, the optical fiber port 113 arranged at the center of the one optical fiber port group 110 and the optical fiber port 123 arranged at the center of the other optical fiber port group 120 are set as a common optical fiber port (Com port) to which light is input from an external portion. In addition, the remaining four optical fiber ports 111, 112, 114, and 115 among the one optical fiber port group 110 and the remaining four optical fiber ports 121, 122, 124, and 125 among the other optical fiber port group 120 are set as optical fiber ports which output the light to an external portion.

Herein, in the case where the signal light having a predetermined wavelength is input from the optical fiber port 113 of the one light input/output port 1, the optical switch 10 can be operated so that the signal light can be output from the optical fiber port allocated with the wavelength among the optical fiber ports 111, 112, 114, and 115 in the same light input/output port 1. In addition, in the case where the signal light having a predetermined wavelength is input from the optical fiber port 123 of the other light input/output port 2, the optical switch 10 can be operated so that the signal light can be output from the optical fiber port allocated with the wavelength among the optical fiber ports 121, 122, 124, and 125 in the same light input/output port 2. Namely, the optical switch 10 functions as a 2-in-1 optical switch wherein two different 1 x 4 optical switch functions corresponding to the light input/output ports are included in one apparatus.

Particularly, in the case where the signal light input from the optical fiber port 113 is a 4-channel WDM signal light including four signal lights having different wavelengths, the optical switch 10 can be operated so that the signal light of each of the channels included in the WDM signal light is output from the optical fiber port allocated to each of the channels among the optical fiber ports 111, 112, 114, and 115. In addition, in the case where the signal light input from the optical fiber port 123 is a 4-channel WDM signal light including four signal lights having different wavelengths, the optical switch 10 can be operated so that the signal light of each of the channels included in the WDM signal light is output from the optical fiber port allocated to each of the channels among the optical fiber ports 121, 122, 124, and 125. In this case, the optical switch 10 functions as a 2-in-1 wavelength selective switch where two different 1 x 4 wavelength selective switch functions corresponding to the light input/output ports are included in one apparatus.

Next, the operation of the optical switch 10 will be described with reference to FIGS. 1 to 3. In addition, hereinafter, the optical switch operation of the one light input/output port 1 among the two light input/output ports 1 and 2 included in the optical switch 10 is described, and after that, the optical switch operation of the other light input/output port 2 is described. However, the two optical switch operations are performed independently. Namely, the two optical switch operations are performed without a specified performing order between the light input/output port 1 and the light input/output port 2.

First, if a signal light L1 having a wavelength λ1 is input from an external portion to the optical fiber port 113, the collimating lens group 116 allows the input signal light L1 to be a substantially parallel light of which beam shape is substantially circular. Next, the anamorphic optical system 7 shapes the beam of the signal light L1, which is a substantially parallel light, to be in an elliptical shape by enlarging the beam shape in the X-axis direction. Next, the wavelength dispersion element 8 diffracts the shaped signal light L1 with the diffraction angle corresponding to the wavelength λ1. Next, the condenser lens 6 condenses the diffracted signal light L1 on the optical path switching unit 5a of the optical path manipulation unit 5 (more specifically, LCOS 5a-1 illustrated in FIG. 3). The LCOS 5a-1 as a component of the optical path switching unit 5a diffracts the condensed signal light L1 with the diffraction angle set corresponding to the wavelength λ1, so that the LCOS 5a-1 outputs (reflects) the signal light L1 as a signal light L2 having the wavelength λ1. The condenser lens 6 passes the signal light L2 output from the optical path switching unit 5a toward the light input/output port 1 and allows the optical path to be parallel to the optical path of the signal light L1. In addition, in FIG. 1, the optical paths of the signal light L1 and the signal light L2 before and after the switching of the optical paths substantially overlap each other.

Next, the wavelength dispersion element 8 diffracts the signal light L2 input from the condenser lens 6 again. Next, the anamorphic optical system 7 reduces the beam shape of the signal light L2 in the X-axis direction to return to a substantially circular shape and passes the signal light L2 to the light input/output port 1. For example, as illustrated in FIG. 2, the anamorphic optical system 7 and the wavelength dispersion element 8 keep the optical path of the signal light L1 and the optical path of the signal light L2 parallel. Next, the signal light L2 is input to the collimating lens corresponding to the optical fiber port 111 allocated to the wavelength λ1 in the collimating lens group 116. The corresponding collimating lens condenses the signal light L2 to be coupled with the optical fiber port 111. The optical fiber port 111 outputs the coupled light, that is, the signal light L2 having the wavelength λ1 to an external portion.

In this manner, the optical switch 10 can switch the optical path of the signal light input from the optical fiber port 113, which is a Com port of the light input/output port 1, to the optical path which reaches the optical fiber port 111 (output port in the same light input/output port 1) allocated to the wavelength λ1.

In addition, if the wavelength of the signal light L1 input from an external portion to the optical fiber port 113 is λ2, λ3, or λ4, similarly to the above-described case of wavelength λ1, the signal light L1 passes through the anamorphic optical system 7 and the like, and after that, the signal light L1 is diffracted with the diffraction angle corresponding to the wavelength (λ2, λ3, or λ4) by the wavelength dispersion element 8. Herein, the wavelengths λ1, λ2, λ3, and λ4 are different. The diffracted signal light L1 reaches the condenser lens 6. The condenser lens 6 condenses the signal light toward the LCOS portion corresponding to the wavelength of the signal light L1 in the optical path switching unit 5a. Namely, the condenser lens 6 condenses the signal light L1 having the wavelength λ2 on the LCOS 5a-2, condenses the signal light L1 having the wavelength λ3 on the LCOS 5a-3, or condenses the signal light L1 having the wavelength λ4 on the LCOS 5a-4. The LCOS 5a-2 diffracts the signal light L1 with the diffraction angle set corresponding to the wavelength λ2 and switches the optical path of the signal light L1 to the optical path of a signal light L3 having the wavelength λ2. The LCOS 5a-3 diffracts the signal light L1 with the diffraction angle set corresponding to the wavelength λ3 and switches the optical path of the signal light L1 to the optical path of a signal light L4 having the wavelength λ3. The LCOS 5a-4 diffracts the signal light L1 with the diffraction angle set corresponding to the wavelength λ4 and switches the optical path of the signal light L1 to the optical path of a signal light L5 having the wavelength λ4.

Similarly to the above-described case of the wavelength λ1, the signal light (that is, any one of the signal lights L3 to L5) after the switching of the optical paths passes though the condenser lens 6, the wavelength dispersion element 8, the anamorphic optical system 7, and the collimating lens group 116 in this order. The signal light after the passing through the collimating lens is output from the optical fiber port corresponding to the wavelength in the optical fiber port group 110 to an external portion. Namely, the signal light L3 having the wavelength λ2 is output from the optical fiber port 112 allocated to the wavelength λ2 to an external portion; the signal light L4 having the wavelength λ3 is output from the optical fiber port 114 allocated to the wavelength λ3 to an external portion; and the signal light L5 having the wavelength λ4 is output from the optical fiber port 115 allocated to the wavelength λ4 to an external portion.

Particularly, in the case where the signal light L1 input from an external portion to the optical fiber port 113 is a 4-channel WDM signal light including signal lights having wavelengths λ1, λ2, λ3, and λ4, similarly to the above-described case of the signal lights having wavelengths λ1 to λ4, the optical path of the WDM signal light can be switched to the optical path of the signal light L2 having the wavelength λ1, the optical path of the signal light L3 having the wavelength λ2, the optical path of the signal light L4 having the wavelength λ3, and the optical path of the signal light L5 having the wavelength λ4. Next, the signal lights L2 to L5 originated from the WDM signal light are output from the optical fiber ports 111, 112, 114, and 115 allocated to the wavelengths λ1, λ2, λ3, and λ4 to an external portion. In this manner, the optical switch 10 can perform the switching of desired optical paths selected according to the wavelength in the light input/output port 1.

On the other hand, with respect to the light input/output port 2, substantially the same optical switch operation as the case of the above-described light input/output port 1 is performed. Namely, if a signal light L1 having a wavelength λ11 is input from an external portion to the optical fiber port 123 of the light input/output port 2, the collimating lens group 126 allows the input signal light L11 to be a substantially parallel light of which beam shape is substantially circular. Next, the anamorphic optical system 7 shapes the beam of the signal light L11 which is substantially parallel light to be in an elliptical shape by enlarging the beam in the X-axis direction. Next, the wavelength dispersion element 8 diffracted the shaped signal light L11 with the diffraction angle corresponding to the wavelength λ11. Next, the condenser lens 6 condenses the diffracted signal light L11 on the optical path switching unit 5b of the optical path manipulation unit 5 (more specifically, the LCOS 5b-1 illustrated in FIG. 3). The LCOS 5b-1 as a component of the optical path switching unit 5b diffracts the condensed signal light L11 with the diffraction angle set corresponding to the wavelength λ11, so that the LCOS 5b-1 outputs (reflects) the signal light L11 as a signal light L12 having the wavelength λ11. The condenser lens 6 passes the signal light L12 output from the optical path switching unit 5b toward the light input/output port 2 and allows the optical path to be parallel to the optical path of the signal light L11. In addition, in FIG. 1, the optical paths of the signal light L11 and the signal light L12 before and after the switching of the optical paths substantially overlap each other.

Next, the wavelength dispersion element 8 diffracts the signal light L12 input from the condenser lens 6 again. Next, the anamorphic optical system 7 reduces the beam shape of the signal light L12 in the X-axis direction to return to a substantially circular shape and passes the signal light L12 to the light input/output port 2. For example, as illustrated in FIG. 2, the anamorphic optical system 7 and the wavelength dispersion element 8 keep the optical path of the signal light L11 and the optical path of the signal light L12 parallel. Next, the signal light L12 is input to the collimating lens corresponding to the optical fiber port 121 allocated to the wavelength λ11 in the collimating lens group 126. The corresponding collimating lens condenses the signal light L12 to be coupled with the optical fiber port 121. The optical fiber port 121 outputs the coupled light, that is, the signal light L12 having the wavelength λ11 to an external portion.

In this manner, the optical switch 10 can switches the optical path of the signal light input from the optical fiber port 123, which is a Com port of the light input/output port 2, to the optical path which reaches the optical fiber port 121 (output port in the same light input/output port 2) allocated to the wavelength λ11.

In addition, if the wavelength of the signal light L11 input from an external portion to the optical fiber port 123 is λ12, λ13, or λ14, similarly to the above-described case of the wavelength λ11, the signal light L11 passes through the anamorphic optical system 7 and the like, and after that, the signal light L11 is diffracted with the diffraction angle corresponding to the wavelength (λ12, λ13, or λ14) by the wavelength dispersion element 8. Herein, the wavelengths λ11, λ12, λ13, and λ14 are different from each other. The diffracted signal light L11 reaches the condenser lens 6. The condenser lens 6 condenses the signal light L11 toward the LOS portion corresponding to the wavelength of the signal light L11 in the optical path switching unit 5b. Namely, the condenser lens 6 condenses the signal light L11 having the wavelength λ12 on the LCOS 5b-2, condenses the signal light L11 having the wavelength λ13 on the LCOS 5b-3, or condenses the signal light L11 having the wavelength λ14 on the LCOS 5b-4. The LCOS 5b-2 diffracts the signal light L11 with the diffraction angle set corresponding to the wavelength λ12 and switches the optical path of the signal light L11 to the optical path of a signal light L13 having the wavelength λ12. The LCOS 5b-3 diffracts the signal light L11 with the diffraction angle set corresponding to the wavelength λ13 and switches the optical path of the signal light L11 to the optical path of a signal light L14 having the wavelength λ13. The LCOS 5b-4 diffracts the signal light L11 with the diffraction angle set corresponding to the wavelength λ14 and switches the optical path of the signal light L11 to the optical path of a signal light L15 having the wavelength λ14.

Similarly to the above-described case of the wavelength λ11, the signal light (that is, any one of the signal lights L13 to L15) after the switching of the optical paths passes through the condenser lens 6, the wavelength dispersion element 8, the anamorphic optical system 7, and the collimating lens group 126 in this order. The signal light after the passing through the collimating lens is output from the optical fiber port corresponding to the wavelength in the optical fiber port group 120 to an external portion. Namely, the signal light L13 having the wavelength λ12 is output from the optical fiber port 122 allocated to the wavelength λ12 to an external portion; the signal light L14 having the wavelength λ13 is output from the optical fiber port 124 allocated to the wavelength λ13 to an external portion; and the signal light L15 having the wavelength λ14 is output from the optical fiber port 125 allocated to the wavelength λ14 to an external portion.

Particularly, in the case where the signal light L11 input from an external portion to the optical fiber port 123 is a 4-channel WDM signal light including signal lights having wavelengths λ11, λ12, λ13, and λ14, similarly to the above-described case of the signal lights having wavelengths λ11 to λ14, the optical path of the WDM signal light can be switched to the optical path of the signal light L12 having the wavelength λ11, the optical path of the signal light L13 having the wavelength λ12, the optical path of the signal light L14 having the wavelength λ13, and the optical path of the signal light L15 having the wavelength λ14. Next, the signal lights L12 to L15 originated from the WDM signal light are output from the optical fiber ports 121, 122, 124, and 125 allocated to the wavelengths λ11, λ12, λ13, and λ14 to an external portion. In this manner, the optical switch 10 can perform the switching of desired optical paths selected according to the wavelength in the light input/output port 2.

The LCOSs 5a-1 to 5a-4 and 5b-1 to 5b-4 (refer to FIG. 3) constituting the above-described optical path switching units 5a and 5b have well-known configurations as follows. Namely, each of the LCOSs 5a-1 to 5a-4 and 5b-1 to 5b-4 is configured to include, for example, a pixel electrode group as a reflecting layer having reflectivity of about 100%, a liquid crystal layer which is a spatial light modulation layer, an alignment film, an ITO (Indium Tin Oxide) electrode, and a cover glass, which are sequentially layered on a silicon substrate where a liquid crystal driving circuit is formed. The pixel electrode group is configured by arranging a plurality of pixel electrodes in the Z-axis direction which is the arrangement direction of the optical fiber port groups 110 and 120. Therefore, it is preferable that the positional relationship between the condenser lens 6 and the optical path manipulation unit 5 is set so that the beam shape (refer to the broken-line portion of FIG. 3) of the signal light incident on each of the LCOSs 5a-1 to 5a-4 and 5b-1 to 5b-4 is elongated in the Z-axis direction. Accordingly, since the number of pixel electrodes being contributed to diffraction of the signal light can be increased, it is possible to improve diffraction efficiency. In addition, since a phase difference between adjacent pixels can be decreased by reducing a pixel width of each of the LCOSs 5a-1 to 5a-4 and 5b-1 to 5b-4, it is possible to suppress an increase in diffraction angle for each LCOS.

Next, the optical paths between the light input/output ports 1 and 2 and the condenser lens 6 described above will be described. First, the optical paths between the light input/output ports 1 and 2 and the condenser lens 6 as seen from the arrangement direction (hereinafter, referred to as a port arrangement direction) of the optical fiber port groups 110 and 120, that is, the Z axis direction will be described with reference FIG. 1.

The optical paths (hereinafter, referred to as input/output optical paths) of the signal lights L1 to L5 and L11 to L15 input or output at the plurality of light input/output ports 1 and 2 are the optical paths indicated by solid-line arrows and broken-line arrows of FIG. 1 as seen from the Z-axis direction. Hereinafter, the input/output optical paths described with reference to FIG. 1 are paths as seen from the Z-axis direction.

As illustrated in FIG. 1, the input/output optical paths of the light input/output ports 1 and 2 substantially overlap each other as seen from the Z-axis direction. On the other hand, the input/output optical paths between the wavelength dispersion element 8 and the condenser lens 6 are not parallel to each other and have a predetermined angle in the X-axis direction, that is, the wavelength dispersion direction of the wavelength dispersion element 8. Herein, as illustrated in FIG. 1, each of the input/output optical paths intersects a substantially central portion of the wavelength dispersion element 8. In addition, the input/output optical paths between the wavelength dispersion element 8 and the condenser lens 6 approximately have a positional relationship of line symmetry about the optical axis 6a of the condenser lens 6.

Next, the input/output optical paths between the light input/output ports 1 and 2 and the condenser lens 6 as seen from the direction perpendicular to the port arrangement direction of the optical fiber port groups 110 and 120, that is, the X-axis direction will be described with reference to FIG. 2. Hereinafter, the input/output optical paths described with reference to FIG. 2 are paths as seen from the X-axis direction.

As indicated by solid-line arrows and broken-line arrows of FIG. 2, the input/output optical paths of the plurality of light input/output ports 1 and 2 corresponding to the condenser lens 6 are parallel to each other between the optical fiber ports in the same optical fiber port group as seen from the direction (X-axis direction) perpendicular to the port arrangement direction of the optical fiber port groups 110 and 120 and are not parallel to each other between the optical fiber ports in the different optical fiber port groups. Namely, the input/output optical paths of the light input/output ports 1 and 2 are parallel to each other between the optical fiber ports 111 to 115 in the one optical fiber port group 110 and are parallel to each other between the optical fiber ports 121 to 125 in the other optical fiber port group 120. In addition, the input/output optical paths are not parallel to each other between the optical fiber ports 111 to 115 and the optical fiber ports 121 to 125 corresponding to the different optical fiber port groups 110 and 120.

In addition, as illustrated in FIG. 2, the input/output optical paths of the light input/output ports 1 and 2 are disposed in the zone between the light input/output ports 1 and 2 and the condenser lens 6, so that optical influence of the anamorphic optical system 7 and the wavelength dispersion element 8 in the Z-axis direction is not large. Namely, in the zone, the signal lights L1 to L5 and L11 to L15 on the input/output optical paths of the light input/output ports 1 and 2 are not almost refracted or diffracted in the Z-axis direction by the anamorphic optical system 7 or the wavelength dispersion element 8.

In addition, as illustrated in FIG. 2, the input/output optical paths corresponding to the optical fiber port group 110 and the input/output optical paths corresponding to the optical fiber port group 120 in the input/output optical paths of the light input/output ports 1 and 2 intersect each other in the zone between the light input/output ports 1 and 2 and the condenser lens 6. More specifically, the optical paths of the lights input from the two different optical fiber port groups 110 and 120 in the plurality of light input/output ports 1 and 2 intersect each other in the vicinity of the focal point of the condenser lens 6. In addition, in the first embodiment the wavelength dispersion element 8 is arranged in the vicinity of the focal point of the condenser lens 6. Namely, as illustrated in FIG. 2, the optical paths of the lights intersect each other in the vicinity of the wavelength dispersion element 8.

As described above, the relative arrangement of the two light input/output ports 1 and 2 forming the input/output optical paths is set by considering the intersection position of the input/output optical paths or the separation distance d between the imaging points in the optical path manipulation unit 5 (refer to FIG. 3), and the like. More specifically, as illustrated in FIG. 2, the light input/output ports 1 and 2 are inclined with respect to the optical axis 6a so that the optical axis of each of the collimating lens groups 116 and 126 and the optical axis 6a of the condenser lens 6 intersect each other between the light input/output ports 1 and 2 and the optical path manipulation unit 5. In this case, the optical fiber port groups 110 and 120 of the light input/output ports 1 and 2 are not parallel to each other and have a predetermined angle $\theta 1$ in the plane parallel to the Z-axis direction. The angle $\theta 1$ between the optical fiber port groups 110 and 120 is set so that the relative positional relationship among the light input/output ports 1 and 2, the condenser lens 6, and the optical path manipulation unit 5 is considered and the separation distance d is a predetermined value or more. Due to the adjustment of the angle θ1, the separation distance d is set to a distance which is enough to prevent the interference between the light from the optical fiber port group 110 and the light from the optical fiber port group 120, input to the optical path manipulation unit 5.

Particularly, in a case where the optical fiber port groups 110 and 120 are arranged with line symmetry about the optical axis 6a of the condenser lens 6, each of the optical fiber port groups 110 and 120 is not parallel to the optical axis 6a and has a predetermined angle (hereinafter, referred to as an offset angle). In this case, the offset angle θ is 1/2 times the angle θ1 between the optical fiber port groups 110 and 120 (refer to FIG. 2). The separation distance d between the above-described imaging points is expressed by the following Equation (1) by using the offset angle θ and the focal length f of the condenser lens 6.

$$d = 2 \times f \times \tan\theta \qquad\qquad (1)$$

Namely, the offset angle θ may be set so as to satisfy the following Equation (2) based on Equation (1).

$$\theta = \arctan\{d/(2 \times f)\} \qquad\qquad (2)$$

Hereinbefore, as described, in the first embodiment of the present invention, the optical fiber port groups which input or output a light are installed in the two different light input/output ports; the optical fiber port groups are grouped according to the light input/output ports; the optical path switching unit corresponding to the optical fiber port group of the one light input/output port and the optical path switching unit corresponding to the optical fiber port group of the other light input/output port are installed in the optical path manipulation unit; the two optical path switching units switch the optical path of the light input from the input port in the optical fiber port group to the optical path toward the output port in the same optical fiber port group for each of the light input/output ports; and the condenser lens which condenses the light input from the light input/output port on the optical path switching unit for each of the optical fiber port groups optically couples the two light input/output port with the optical path manipulation unit. In addition, as seen from the direction perpendicular to the port arrangement direction of the different optical fiber port groups, the optical fiber ports in the same optical fiber port group are parallel to each other, the optical fiber ports in the different optical fiber port groups are not parallel to each other, the input/output optical paths of the two light input/output ports with respect to the condenser lens are parallel to each other between the optical fiber ports in the same optical fiber port group and are not parallel to each other between the optical fiber ports in the different optical fiber port groups.

Therefore, the space occupied by the optical paths formed between the light input/output ports and the optical path manipulation unit can be suppressed to the minimum. Accordingly, it is possible to suppress an increase in size of various optical parts commonly shared in the optical switch functions. In addition, the above-described optical path manipulation unit, condenser lens, anamorphic optical system, wavelength dispersion element, and various optical parts necessary for one optical switch function (including the wavelength selective switch function) can be commonly used for the optical switch function of the one light input/output port and optical switch function of the other light input/output port. Therefore, it is possible to suppress an increase in the number of necessary optical parts. Particularly, even in the case of configuring a 2-in-1 wavelength selective switch, there is no need to use optical parts having particular optical characteristics and particular shape. As a result, it is possible to suppress an increase in size of the optical switch and an increase in cost, and it is possible to increase the number of light input/output ports (for example, the number of optical fiber ports) by using a simple configuration of the optical switch.

In addition, in the first embodiment of the present invention, two different light input/output ports are arranged so as to be inclined with respect to the optical axis of the condenser lens. Therefore, by adjusting the angles between the optical axes of the two light input/output port and the optical axis of the condenser lens, the space occupied by the optical paths between the light input/output ports and the optical path manipulation unit can be easily reduced, so that it is possible to decrease the size of the optical switch and to reduce the cost.

In addition, since the optical paths of the lights input from the two different optical fiber port groups are allowed to intersect each other in the vicinity of the focal point of the condenser lens, it is possible to more easily suppress an increase in size of the condenser lens. In addition, since the wavelength dispersion element is arranged in the vicinity of the focal point, it is easy to position the spot of each light input from each of the optical fiber port groups to the wavelength dispersion element on a predetermined central axis (central axis parallel to the Z axis) of the wavelength dispersion element. As a result, the position of the spot of the light after the wavelength dispersion, which is incident on the optical path manipulation unit, can be stabilized, so that it is possible to suppress an increase in size of the optical path manipulation unit. Accordingly, it is possible to further suppress an increase in size of the optical switch and an increase in cost.

Next, a second embodiment of the present invention will be described. In the above-described first embodiment, the anamorphic optical system 7 is configured with a pair of the anamorphic prisms 7a and 7b, that is, an anamorphic prism pair. However, in the second embodiment, an anamorphic optical system is configured with a plurality of cylindrical lenses.

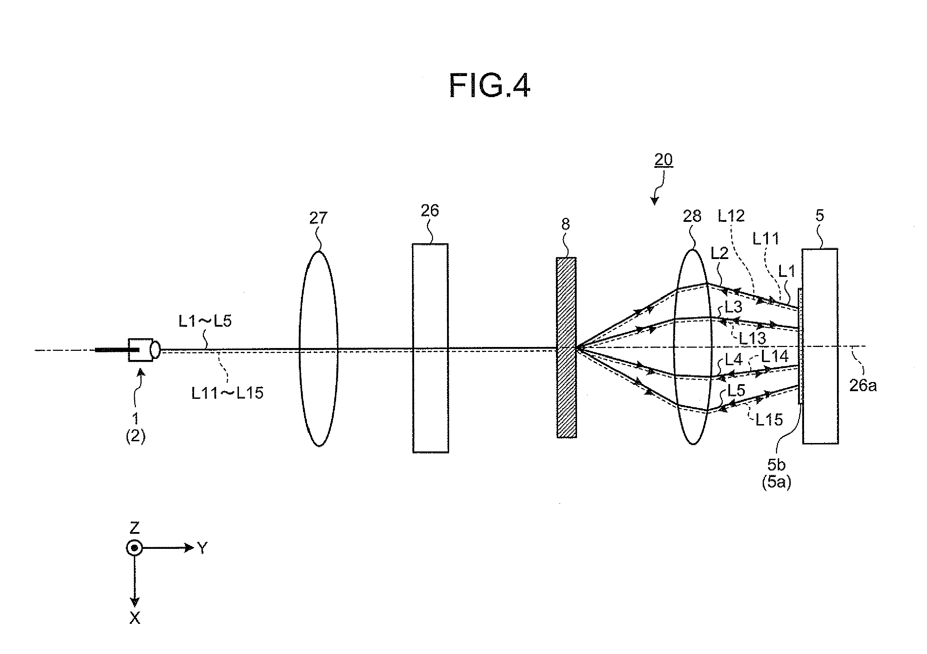

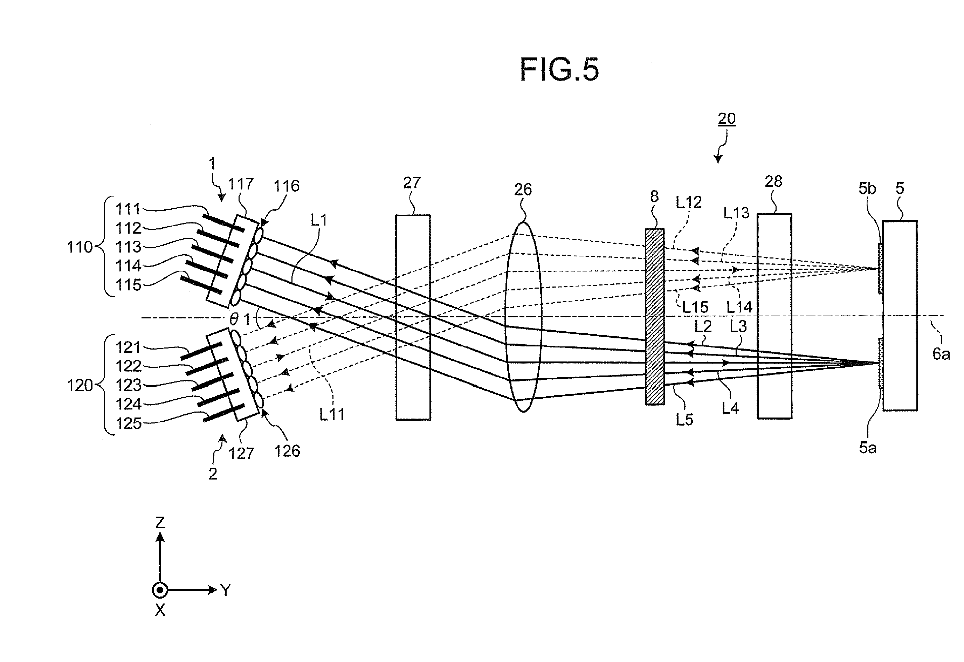

First, a configuration of the optical switch according to the second embodiment of the present invention will be described. FIG. 4 is a schematic diagram illustrating a configuration example of the optical switch according to the second embodiment of the present invention. In FIG. 4, the optical switch according to the second embodiment is illustrated as seen from the positive direction in the Z axis direction of the XYZ coordinate system. FIG. 5 is a diagram illustrating the optical switch illustrated in FIG. 4 as seen from the positive direction in the X axis direction of the XYZ coordinate system. As illustrated in FIGS. 4 and 5, an optical switch 20 according to the second embodiment is configured to include cylindrical lenses 26 to 28 instead of the condenser lens 6 and the anamorphic optical system 7 of the optical switch 10 according to the above-described first embodiment. In addition, the light input/output ports 1 and 2 of the optical switch 20 are arranged on the plane substantially parallel to an optical axis 26a of the cylindrical lens 26 as seen from the Z-axis direction. The other configurations are the same as those of the first embodiment, and the same components are denoted by the same reference numerals.

The cylindrical lens 26 condenses the lights input from the plurality of light input/output ports 1 and 2 to the plurality of optical path switching units 5a and 5b corresponding to the optical fiber port groups 110 and 120, optically couples the lights input from the plurality of optical path switching units 5a and 5b to the plurality of light input/output ports 1 and 2 corresponding to the optical fiber port groups 110 and 120, so that the cylindrical lens 26 functions as a condenser lens of optically coupling the plurality of light input/output ports 1 and 2 with the optical path manipulation unit 5. More specifically, the cylindrical lens 26 has a condenser characteristic only in the Z-axis direction and is arranged between the light input/output ports 1 and 2 and the wavelength dispersion element 8. The cylindrical lens 26 condenses the light from the optical fiber port group 110 on the one optical path switching unit 5a and condenses the light from the optical fiber port group 120 on the other optical path switching unit 5b. In this case, as illustrated in FIG. 5, the cylindrical lens 26 condenses a light in the plane parallel to the Z-axis direction (that is, the port arrangement direction). On the other hand, as illustrated in FIG. 4, the cylindrical lens 26 does not condense a light in the plane parallel to the X-axis direction. In addition, it is preferable that the position of the focal point of the cylindrical lens 26 be substantially coincident with the position of the optical path manipulation unit 5.

Cylindrical lenses 27 and 28 have a condenser characteristic only in the X-axis direction. The cylindrical lens 27 is arranged between the plurality of light input/output ports 1 and 2 and the cylindrical lens 26 and condenses the lights input from the plurality of light input/output ports 1 and 2 on the plane perpendicular to the port arrangement direction (Z-axis direction). On the other hand, the cylindrical lens 28 is arranged between the wavelength dispersion element 8 and the optical path manipulation unit 5 and condenses the lights input from the side of the cylindrical lens 26 (more specifically, from the wavelength dispersion element 8) on the plane perpendicular to the port arrangement direction toward the optical path manipulation unit 5. In addition, the two cylindrical lenses 27 and 28 do not condense a light on the plane perpendicular to the X-axis direction.

Herein, the above-described three cylindrical lenses 26, 27, and 28 constitute an anamorphic optical system which shapes the beam shapes of the lights input from the plurality of light input/output ports 1 and 2 to be in an elliptical shape. The anamorphic optical system constructed with the cylindrical lenses 26 to 28 has a function of reducing the beam shapes of the lights input from the light input/output ports 1 and 2 in the direction (X-axis direction) perpendicular to the port arrangement direction. In addition, the anamorphic optical system constructed with the cylindrical lenses 26 to 28 has a function of enlarging the beam shape of the light input from the optical path manipulation unit 5 in the X-axis direction. In addition, the cylindrical lens 26 has a single optical axis 26a. It is preferable that each of the cylindrical lenses 27 and 28 be arranged so that the optical axis thereof is substantially coincident with the optical axis 26a of the cylindrical lens 26.

Similarly to the optical switch 10 according to the first embodiment, in the optical switch 20 having the above-described configuration, the optical fiber port 113 in the optical fiber port group 110 and the optical fiber port 123 in the optical fiber port group 120 are set as a Com port to which a light is input from an external portion. In addition, the remaining four optical fiber ports 111, 112, 114, and 115 in the optical fiber port group 110 and the remaining four optical fiber ports 121, 122, 124, and 125 in the optical fiber port group 120 are set as optical fiber ports which output light to an external portion. Similarly to the first embodiment, the optical switch 20 can perform the optical switch operation in the one light input/output port 1 and the optical switch operation in the other light input/output port 2. Namely, the optical switch 20 functions as a 2-in-1 optical switch in which two different 1 × 4 optical switch functions corresponding to the light input/output ports are included in one apparatus.

Particularly, in a case where the signal light input from the optical fiber port 113 is a 4-channel WDM signal light including four signal lights having different wavelengths, similarly to the first embodiment, the optical switch 20 can perform the wavelength selective switch operation in the one light input/output port 1 and the wavelength selective switch operation in the other light input/output port 2. In this case, the optical switch 20 functions as a 2-in-1 wavelength selective switch where two different $1 \times 4$ wavelength selective switch functions corresponding to the light input/output ports are included in one apparatus.

Next, the operations of the optical switch 20 will be described with reference to FIGS. 4 and 5. In addition, hereinafter, the optical switch operation in the one light input/output port 1 among the two light input/output ports 1 and 2 included in the optical switch 20 is described, and after that, the optical switch operation in the other light input/output port 2 is described. However, the two optical switch operations are performed independently. Namely, the two optical switch operations are performed without a specified performing order between the light input/output port 1 and the light input/output port 2.

First, if a signal light L1 having the wavelength λ1 is input from an external portion to the optical fiber port 113, the collimating lens group 116 allows the input signal light L1 to be a substantially parallel light of which beam shape is substantially circular. Next, the cylindrical lens 27 enlarges the beam shape of the signal light L1, which is a substantially parallel light, in the X-axis direction. Next, similarly to the condenser lens 6 in the first embodiment, the cylindrical lens 26 condenses the signal light L1 from the cylindrical lens 27 toward the optical path switching unit 5a of the optical path manipulation unit 5. Subsequently, the wavelength dispersion element 8 diffracts the signal light L1 from the cylindrical lens 26 with the diffraction angle corresponding to the wavelength λ1. Next, while reducing the beam shape of the diffracted signal light L1 in the X-axis direction, the cylindrical lens 28 condenses the signal light L1 toward the optical path switching unit 5a. Herein, similarly to the case of the first embodiment, due to the functions of the three cylindrical lenses 26 to 28, the beam of the signal light L1 incident on the optical path switching unit 5a is shaped to be in an elliptical shape. Similarly to the case of the first embodiment, due to the function of the optical path switching unit 5a, the optical path manipulation unit 5 outputs (reflects) the signal light L1 as a signal light L2 having the wavelength λ1. While enlarging the beam shape of the signal light L2 from the optical path switching unit 5a in the X-axis direction, the cylindrical lens 28 condenses the signal light L2 toward the wavelength dispersion element 8 so as to approach to the optical axis 26a of the cylindrical lens 26. In addition, in FIG. 4, the optical paths of the signal light L1 and the signal light L2 before and after the switching of the optical paths substantially overlap each other.

Next, the wavelength dispersion element 8 diffracts the signal light L2 input from the cylindrical lens 28 again. Next, the cylindrical lens 26 passes the diffracted signal light L2 toward the light input/output port 1 and allows the optical path to be parallel to the optical path of the signal light L1. Next, while reducing the beam shape of the signal light L2 from the cylindrical lens 26 in the X-axis direction, the cylindrical lens 27 outputs the signal light L2 toward the light input/output port 1. In this case, as illustrated in FIG. 5, the cylindrical lens 27 keeps the optical path of the signal light L1 and the optical path of the signal light L2 parallel. Herein, similarly to the case of the first embodiment, due to the functions of the three cylindrical lenses 26 to 28, the beam shape of the signal light L2 incident on the light input/output port 1 returns from an elliptical shape to a substantially circular shape. Next, similarly to the case of the first embodiment, the signal light L2 passes through the collimating lens group 116 to be coupled with the optical fiber port 111 allocated to the wavelength λ1 and is output from the optical fiber port 111 to an external portion.

In this manner, the optical switch 20 can switch the optical path of the signal light input from the optical fiber port 113, which is a Com port of the light input/output port 1, to the optical path which reaches the optical fiber port 111 (output port in the same light input/output port 1) allocated to the wavelength λ1.

In addition, if the wavelength of the signal light L1 input from an external portion to the optical fiber port 113 is λ2, λ3, or λ4, similarly to the above-described case of the wavelength λ1, the signal light L1 passes through the cylindrical lens 27 and the like, and after that, the signal light L1 reaches the cylindrical lens 26. The cylindrical lens 26 condenses the signal light L1 toward the LCOS portion corresponding to the wavelength of the signal light L1 in the optical path switching unit 5a and inputs the signal light L1 to the wavelength dispersion element 8. The wavelength dispersion element 8 diffracts the signal light L1 with the diffraction angle corresponding to the wavelength (λ2, λ3, or λ4) of the signal light L1. The diffracted signal light L1 passes through the cylindrical lens 28 to reach the optical path manipulation unit 5. Similarly to the case of the first embodiment, the optical path manipulation unit 5 manipulates the optical path due to the function of the LCOS portion corresponding to the wavelength of the signal light L1 in the optical path switching unit 5a. Namely, as described above, the optical path switching unit 5a switches the optical path of the signal light L1 having the wavelength λ2 to the optical path of the signal light L3 having the wavelength λ2, switches optical path of the signal light L1 having the wavelength λ3 to the optical path of the signal light L4 having the wavelength λ3, or switches the optical path of the signal light L1 having the wavelength λ4 to the optical path of the signal light L5 having the wavelength λ4.

Similarly to the above-described case of the wavelength λ1, the signal light (that is, any one of the signal lights L3 to L5) after the switching of the optical paths passes through the cylindrical lens 28, the wavelength dispersion element 8, the cylindrical lens 26, the cylindrical lens 27, and the collimating lens group 116 in this order. Next, the signal light L3 having the wavelength λ2 is output from the optical fiber port 112 allocated to the wavelength λ2 to an external portion; the signal light L4 having the wavelength λ3 is output from the optical fiber port 114 allocated to the wavelength λ3 to an external portion; and the signal light L5 having the wavelength $\lambda4$ is output from the optical fiber port 115 allocated to the wavelength $\lambda4$ to an external portion.

Particularly, in a case where the signal light L1 input from an external portion to the optical fiber port 113 is a 4-channel WDM signal light including signal lights having wavelengths $\lambda1, \lambda2, \lambda3,$ and $\lambda4$, similarly to the above-described case of the signal lights having wavelengths $\lambda1$ to $\lambda4$, the optical path of the WDM signal light can be switched to the optical path of the signal light L2 having the wavelength $\lambda1$, the optical path of the signal light L3 having the wavelength $\lambda2$, the optical path of the signal light L4 having the wavelength $\lambda3$, and the optical path of the signal light L5 having the wavelength $\lambda4$. Next, the signal light L2 to L5 originated from the WDM signal light are output from the optical fiber ports 111, 112, 114, and 115 allocated to the wavelengths $\lambda1, \lambda2, \lambda3,$ and $\lambda4$ to an external portion. In this manner, the optical switch 20 can perform the switching of desired optical paths selected according to the wavelength in the light input/output port 1.

On the other hand, the optical switch operations of the light input/output port 2 are also substantially the same as those of the above-described case of the light input/output port 1. Namely, if the signal light L11 having the wavelength $\lambda11$ is input from an external portion to the optical fiber port 123, the collimating lens group 126 allows the input signal light L11 to be a substantially parallel light of which beam shape is substantially circular. Next, the cylindrical lens 27 enlarges the beam shape of the signal light L11, which is a substantially parallel light, in the X-axis direction. Next, similarly to the condenser lens 6 in the first embodiment, the cylindrical lens 26 condenses the signal light L11 from the cylindrical lens 27 toward the optical path switching unit 5b of the optical path manipulation unit 5. Subsequently, the wavelength dispersion element 8 diffracts the signal light L11 from the cylindrical lens 26 with the diffraction angle corresponding to the wavelength $\lambda11$. Next, while reducing the beam shape of the diffracted signal light L11 in the X-axis direction, the cylindrical lens 28 condenses the signal light L11 toward the optical path switching unit 5b. Herein, similarly to the case of the first embodiment, due to the functions of the three cylindrical lenses 26 to 28, the beam of the signal light L11 incident on the optical path switching unit 5b is shaped to be in an elliptical shape. In addition, in the case of a confocal optical system, the image magnification m is defined based on a ratio of focal lengths of two lenses. Therefore, by configuring so that the focal length of the cylindrical lens 27 is longer than the focal length of the cylindrical lens 28, the beam can be reduced in the X-axis direction. Similarly to the case of the first embodiment, due to the function of the optical path switching unit 5b, the optical path manipulation unit 5 outputs the signal light L11 as a signal light L12 having the wavelength $\lambda11$. While enlarging the beam shape of the signal light L12 from the optical path switching unit 5b in the X-axis direction, the cylindrical lens 28 condenses the signal light L12 toward the wavelength dispersion element 8 so as to reach the optical axis 26a of the cylindrical lens 26. In addition, in FIG. 4, the optical paths of the signal light L11 and the signal light L12 before and after the switching of the optical paths substantially overlap each other.

Next, the wavelength dispersion element 8 diffracts the signal light L12 input from the cylindrical lens 28 again. Next, the cylindrical lens 26 passes the diffracted signal light L12 toward the light input/output port 2 and allows the optical path to be parallel to the optical path of the signal light L11. Next, while reducing the beam shape of the signal light L12 from the cylindrical lens 26 in the X-axis direction, the cylindrical lens 27 outputs the signal light L12 toward the light input/output port 2. In this case, as illustrated in FIG. 5, the cylindrical lens 27 keeps the optical path of the signal light L11 and the optical path of the signal light L12 parallel. Herein, similarly to the case of the first embodiment, due to the functions of the three cylindrical lenses 26 to 28, the beam shape of the signal light L12 incident on the light input/output port 2 returns from an elliptical shape to a substantially circular shape. Next, similarly to the case of the first embodiment, the signal light L12 passes through the collimating lens group 126 to be coupled with the optical fiber port 121 allocated to the wavelength $\lambda11$ and is output from the optical fiber port 121 to an external portion.

In this manner, the optical switch 20 can switch the optical path of the signal light input from the optical fiber port 123, which is a Com port of the light input/output port 2, to the optical path which reaches the optical fiber port 121 (output port in the same light input/output port 2) allocated to the wavelength $\lambda11$.

In addition, if the wavelength of the signal light L11 input from an external portion to the optical fiber port 123 is $\lambda2, \lambda3,$ or $\lambda4$, similarly to the above-described case of the wavelength $\lambda11$, the signal light L11 passes through the cylindrical lens 27 and the like, and after that, the signal light L11 reaches the cylindrical lens 26. The cylindrical lens 26 condenses the signal light L11 toward the LCOS portion corresponding to the wavelength of the signal light L11 in the optical path switching unit 5b and inputs the signal light L11 to the wavelength dispersion element 8. The wavelength dispersion element 8 diffracts the signal light L11 with the diffraction angle corresponding to wavelength ($\lambda12, \lambda13,$ or $\lambda14$) of the signal light L11. The diffracted signal light L11 passes through the cylindrical lens 28 to reach the optical path manipulation unit 5. Similarly to the case of the first embodiment, the optical path manipulation unit 5 manipulates the optical paths due to the function of the LCOS portion corresponding to the wavelength of the signal light L11 in the optical path switching unit 5b. Namely, as described above, the optical path switching unit 5b switches the optical path of the signal light L11 having the wavelength $\lambda12$ to the optical path of the signal light L13 having the wavelength $\lambda12$, switches the optical path of the signal light L11 having the wavelength $\lambda13$ to the optical path of the signal light L14 having the wavelength $\lambda13$, or switches the optical path of the signal light L11 having the wavelength $\lambda14$ to the optical path of the signal light L15 having the wavelength $\lambda14$.

Similarly to the above-described case of the wavelength λ11, the signal light (that is, any one of the signal lights L13 to L15) after the switching of the optical paths passes through the cylindrical lens 28, the wavelength dispersion element 8, the cylindrical lens 26, the cylindrical lens 27, and the collimating lens group 126 in this order. Next, the signal light L13 having the wavelength λ12 is output from the optical fiber port 122 allocated to the wavelength λ12 to an external portion; the signal light L14 having the wavelength λ13 is output from the optical fiber port 124 allocated to the wavelength λ13 to an external portion; and the signal light L15 having the wavelength λ14 is output from the optical fiber port 125 allocated to the wavelength λ14 to an external portion.

Particularly, in a case where the signal light L11 input from an external portion to the optical fiber port 123 is a 4-channel WDM signal light including signal lights having wavelengths λ11, λ12, λ13, and λ14, similarly to the above-described case of the signal light having wavelengths λ1 to λ4, the optical path of the WDM signal light can be switched to the optical path of the signal light L12 having the wavelength λ11, the optical path of the signal light L13 having the wavelength λ12, the optical path of the signal light L14 having the wavelength λ13, and the optical path of the signal light L15 having the wavelength λ14. Next, the signal lights L12 to L15 originated from the WDM signal light are output from the optical fiber ports 121, 122, 124, and 125 allocated to the wavelengths λ11, λ12, λ13, and λ14 to an external portion. In this manner, the optical switch 20 can perform the switching of desired optical paths selected according to the wavelength in the light input/output port 2.

Next, the optical paths between the above-described light input/output ports 1 and 2 and the cylindrical lens 26 having substantially the same function as the condenser lens 6 in the first embodiment will be described. First, the optical paths between the light input/output ports 1 and 2 and the cylindrical lens 26 as seen from the port arrangement direction, that is, the Z axis direction will be described with reference to FIG. 4. Hereinafter, the input/output optical paths described with reference to FIG. 4 are paths seen from the Z-axis direction.

As indicated by solid-line arrows and broken-line arrows of FIG. 4, the input/output optical paths of the light input/output ports 1 and 2 substantially overlap each other between the light input/output ports 1 and 2 and the cylindrical lens 26 and are substantially parallel to, for example, the optical axis 26a of the cylindrical lens 26.

Next, the input/output optical paths between the light input/output ports 1 and 2 and the cylindrical lens 26 as seen from the direction perpendicular to the port arrangement direction of the optical fiber port groups 110 and 120, that is, the X-axis direction will be described with reference to FIG. 5. Hereinafter, the input/output optical paths described with reference to FIG. 5 are the paths seen from the X-axis direction.

As indicated by solid-line arrows and broken-line arrows of FIG. 5, the input/output optical paths of the plurality of light input/output ports 1 and 2 corresponding to the cylindrical lens 26 are parallel to each other between the optical fiber ports in the same optical fiber port group as seen from the direction (X-axis direction) perpendicular to the port arrangement direction of the optical fiber port groups 110 and 120 and are not parallel to each other between the optical fiber ports in the different optical fiber port groups. Namely, the input/output optical paths of the light input/output ports 1 and 2 are parallel to each other between the optical fiber ports 111 to 115 in the one optical fiber port group 110 and are parallel to each other between the optical fiber ports 121 to 125 in the other optical fiber port group 120. In addition, the input/output optical paths are not parallel to each other between the optical fiber ports 111 to 115 and the optical fiber ports 121 to 125 corresponding to the different optical fiber port groups 110 and 120.

In addition, as illustrated in FIG. 5, the input/output optical paths of the light input/output ports 1 and 2 are disposed in the zone between the light input/output ports 1 and 2 and the cylindrical lens 26, so that optical influence of the cylindrical lens 27 which is a component of the anamorphic optical system in the Z-axis direction is not large. Namely, in the zone, the signal lights L1 to L5 and L11 to L15 on the input/output optical paths of the light input/output ports 1 and 2 are not almost refracted in the Z-axis direction by the cylindrical lens 27.

In addition, as illustrated in FIG. 5, the input/output optical path corresponding to the optical fiber port group 110 and the input/output optical path corresponding to the optical fiber port group 120 in the input/output optical paths of the light input/output ports 1 and 2 intersect each other in the space between the light input/output ports 1 and 2 and the cylindrical lens 26. More specifically, the optical paths of the lights input from the two different optical fiber port groups 110 and 120 in the plurality of light input/output ports 1 and 2 intersect each other in the vicinity of the focal point of the cylindrical lens 26.

Similarly to the case of the first embodiment, as described above, the relative arrangement of the two light input/output ports 1 and 2 forming the input/output optical paths is set by considering the intersection position of the input/output optical paths or the separation distance d between the imaging points in the optical path manipulation unit 5 (refer to FIG. 3), and the like. In this case, the cylindrical lens 26 having a condenser characteristic only in the port arrangement direction is considered to be a condenser lens that is substantially the same as the condenser lens 6 in the first embodiment.

Hereinbefore, as described, in the second embodiment of the present invention, the anamorphic optical system which shapes the beam of the light to be in an elliptical shape is configured by combining a plurality of cylindrical lenses including a cylindrical lens having a condenser characteristic in the port arrangement direction and a cylindrical lens having a condenser characteristic in the direction (for example, the above-described wavelength dispersion direction) perpendicular to the port arrangement direction; the cylindrical lens having the condenser characteristic in the port arrangement direction in the anamorphic optical system condenses the lights input from a plurality of light input/output ports on a plurality of optical path switching units corresponding to the optical fiber port groups and optically couples the plurality of light input/output ports with the optical path manipulation units; and the other configurations are the same as those of the first embodiment. Therefore, it is possible to suppress an increase in size of the cylindrical lens constituting the anamorphic optical system and increase in the number of parts, and it is possible to easily configure the optical switch capable of obtaining the same effects and functions as those of the above-described first embodiment by using the anamorphic optical system including the cylindrical lenses.

Next, a third embodiment of the present invention will be described. In the above-described first and second embodiments, the light input/output ports I and 2 are arranged in the same plane parallel to the port arrangement direction. However, in the third embodiment, the light input/output ports 1 and 2 are arranged in different planes parallel to the port arrangement direction.

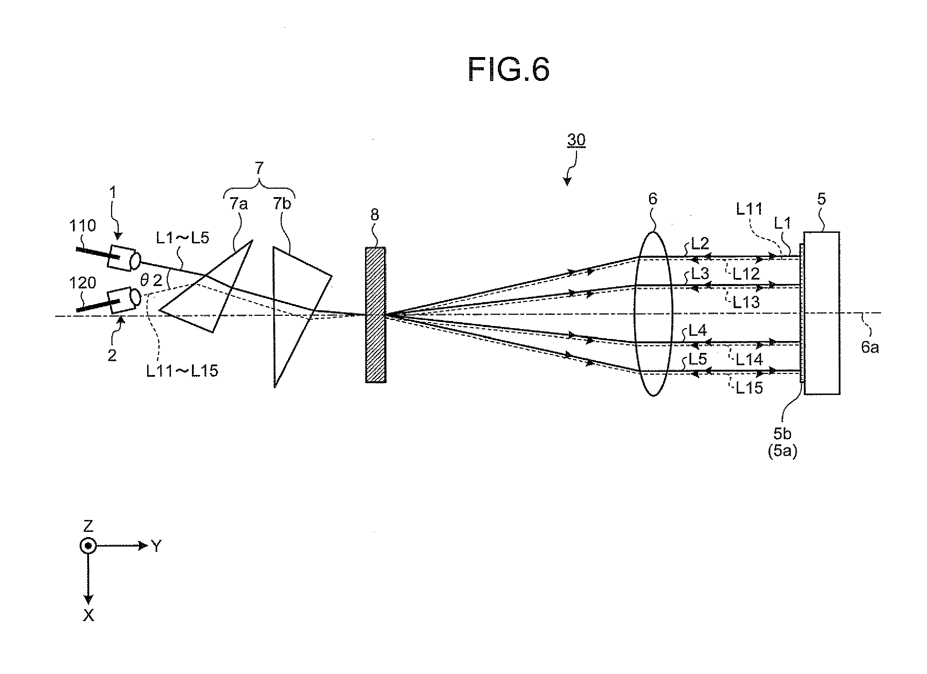

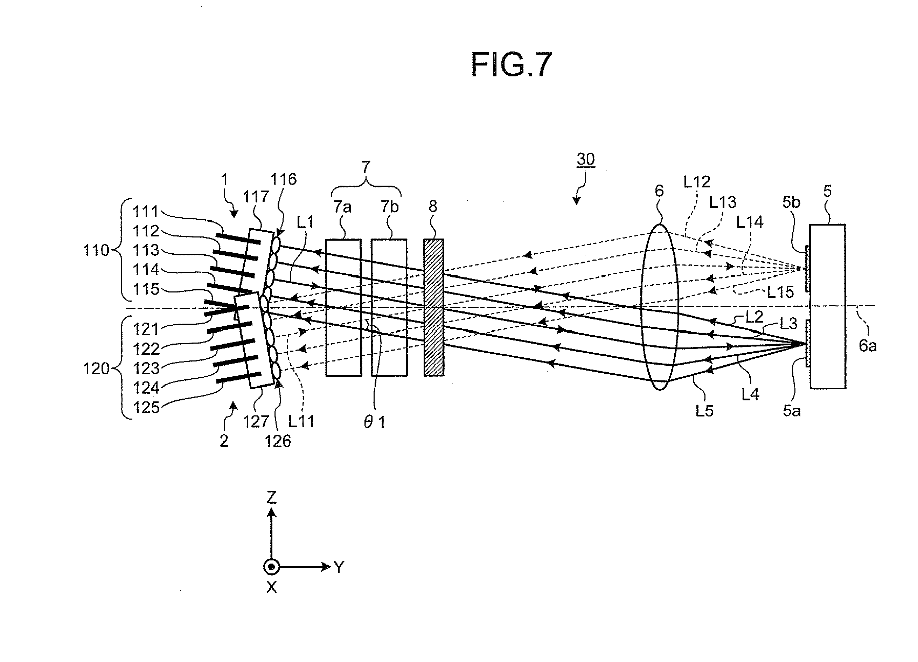

FIG. 6 is a schematic diagram illustrating an optical switch according to the third embodiment of the present invention. In FIG. 6, the optical switch according to the third embodiment is illustrated as seen from the positive direction in the Z axis direction of the XYZ coordinate system. FIG. 7 is a diagram illustrating the optical switch illustrated in FIG. 6 as seen from the positive direction in the X axis direction of the XYZ coordinate system. As illustrated in FIGS. 6 and 7, the light input/output ports 1 and 2 of an optical switch 30 according to the third embodiment are arranged in two rows along the port arrangement direction (that is, the Z axis direction) instead of one-row arrangement exemplified in the above-described first and second embodiments. The other configurations are the same as those of the first embodiment, and the same components are denoted by the same reference numerals.

In the third embodiment, as illustrated in FIGS. 6 and 7, the light input/output ports 1 and 2 are arranged in two rows along the Z-axis direction. In this case, as illustrated in FIG. 6, the light input/output ports 1 and 2 are not parallel to each other as seen from the Z-axis direction. Namely, the optical fiber port group 110 of the light input/output port 1 and the optical fiber port group 120 of the light input/output port 2 are not parallel to each other and have a predetermined angle $\theta 2$ as seen from the Z-axis direction (refer to FIG. 6). The optical fiber ports 111 to 115 and the optical fiber ports 121 to 125 between the different optical fiber port groups 110 and 120 have an angle $\theta 2$ on the plane perpendicular to the Z-axis direction (for example, on the XY plane). In addition, as illustrated in FIG. 6, the light input/output ports 1 and 2 are not parallel to the optical axis 6a of the condenser lens 6 and have a predetermined angle with respect to the optical axis 6a as seen from the Z-axis direction. On the other hand, the two light input/output ports 1 and 2 are arranged in the direction (that is, the X-axis direction) perpendicular to the port arrangement direction. For example, as illustrated in FIG. 7, a portion of the optical fiber port groups 110 and 120 in the light input/output ports 1 and 2 is arranged so as to overlap the X-axis direction.

In addition, the arrangement of the light input/output ports 1 and 2 in the third embodiment are the same as that of the first embodiment except for the above-described two-row arrangement. For example, as seen from the X-axis direction, the optical fiber ports 111 to 115 and 121 to 125 in the optical fiber port groups 110 and 120 are parallel to each other in the same optical fiber port group and are not parallel to each other between the different port groups and have an angle $\theta 1$ in the plane parallel to the Z-axis direction.

Next, the input/output optical path between the light input/output ports 1 and 2 and the condenser lens 6 in the third embodiment will be described. First, the input/output optical path between the light input/output ports 1 and 2 and the condenser lens 6 as seen from the port arrangement direction (that is, the Z axis direction) will be described with reference to FIG. 6.

The input/output optical paths of the light input/output ports 1 and 2 are the optical paths indicated by the solid-line arrows and the broken-line arrows of FIG. 6 as seen from the Z-axis direction. Namely, the input/output optical paths of the light input/output ports 1 and 2 between the light input/output ports 1 and 2 and the anamorphic prism 7a are not parallel to each other and have an angle $\theta 2$. In addition, in the input/output optical paths, the angle $\theta 2$ is decreased as passing through the anamorphic prisms 7a and 7b from the light input/output ports 1 and 2 toward the wavelength dispersion element 8. For example, the angle of the input/output optical paths between the anamorphic prisms 7a and 7b becomes a value (= $(\theta 2)/m$) obtained by dividing the angle $\theta 2$ by an image magnification m of the anamorphic prism 7a. In this manner, the input/output optical paths of the light input/output ports 1 and 2 reach the wavelength dispersion element 8 as the angle $\theta 2$ is decreased. In addition, the angle $\theta 2$ of the input/output optical paths between the anamorphic prism 7b and the wavelength dispersion element 8 approximates a value of about zero. In addition, substantially similarly to the case of the above-described first embodiment, each of the input/output optical paths intersects the substantially central portion of the wavelength dispersion element 8.

The input/output optical paths of the light input/output ports 1 and 2 as seen from the Z-axis direction in the third embodiment are the same as those of the first embodiment between the wavelength dispersion element 8 and the condenser lens 6. In addition, the relative positional relationship (for example, incident positions, incident angles, and the like of the light with respect to the anamorphic prism 7a) of the light input/output ports 1 and 2 and the anamorphic prisms 7a and 7b is set so that the input/output optical paths intersect each other at the wavelength dispersion element 8. On the other hand, the input/output optical paths between the condenser lens 6 and the optical path manipulation unit 5 are shifted from each other. Therefore, when the lights of the input/output optical paths are condensed on the optical path switching units 5a and 5b of the optical path manipulation unit 5, each of the condensing positions is slightly (for example, to a degree of several pixels) shifted in the X-axis direction.

Next, the input/output optical paths between the light input/output ports 1 and 2 and the condenser lens 6 as seen from the direction perpendicular to the port arrangement direction, that is, the X-axis direction will be described with reference to FIG. 7. Hereinafter, the input/output optical paths described with reference to FIG. 7 are the paths seen from the X-axis direction.

Similarly to the case of the first embodiment, as indicated by solid-line arrows and broken-line arrows of FIG. 7, the input/output optical paths of the plurality of light input/output ports 1 and 2 corresponding to the condenser lens 6 in the third embodiment are parallel to each other between the optical fiber ports in the same optical fiber port group as seen from the X-axis direction and are not parallel to each other between the optical fiber ports in the different optical fiber port groups. In addition, similarly to the case of the first embodiment, as illustrated in FIG. 7, the input/output optical paths of the light input/output ports 1 and 2 are disposed in the zone between the light input/output ports 1 and 2 and the condenser lens 6, so that optical influence of the anamorphic optical system 7 and the wavelength dispersion element 8 in the Z-axis direction is not large. In addition, substantially similarly to the case of the first embodiment, the input/output optical path corresponding to the optical fiber port group 110 and the input/output optical path corresponding to the optical fiber port group 120 in the input/output optical paths of the light input/output ports 1 and 2 intersect each other in the zone between the light input/output ports 1 and 2 and the condenser lens 6.

Herein, as described above, in the third embodiment, the light input/output ports 1 and 2 are arranged in two rows along the Z-axis direction. In a case where the light input/output ports 1 and 2 have an angle θ1 similarly to the case of the first embodiment, as illustrated in FIG. 7, the input/output optical paths of the optical fiber port group 110 and the input/output optical paths of the optical fiber port group 120 intersect each other at the position nearer the light input/output ports 1 and 2 in comparison to the case of the first embodiment. The wavelength dispersion element 8 is arranged in the vicinity of the intersection position of the input/output optical paths, and the anamorphic optical system 7 is arranged between the wavelength dispersion element 8 and the light input/output ports 1 and 2. In addition, the condenser lens 6 is arranged at the position which the light wavelength-dispersed by the wavelength dispersion element 8 can be incident on and the optical path manipulation unit 5 is arranged in the vicinity of the focal point of the condenser lens 6. According to the arrangement, the input/output optical paths between the light input/output ports 1 and 2 and the optical path manipulation unit 5 can be shortened in comparison to the first embodiment.

In addition, similarly to the case of the first embodiment, the optical switch 30 according to the third embodiment can perform the optical switch operation using the light input/output port 1 and the optical switch operation using the light input/output port 2. Namely, similarly to the optical switch 10 according to the first embodiment, the optical switch 30 functions as a 2-in-1 optical switch where two different $1 \times 4$ optical switch functions corresponding to the light input/output ports are included in one apparatus. Particularly, similarly to the optical switch 10 according to the first embodiment, in a case where a 4-channel WDM signal light including signal lights having different wavelengths is input, the optical switch 30 functions as a 2-in-1 wavelength selective switch where two different $1 \times 4$ wavelength selective switch functions corresponding to the light input/output ports are included in one apparatus.

Hereinbefore, as described, in the third embodiment of the present invention, the different optical fiber port groups corresponding to the light input/output ports are arranged in two rows along the port arrangement direction, and the other configurations are the same as those of the first embodiment. Therefore, a degree of freedom in arrangement of the different light input/output ports is increased, and the optical fiber port groups can be arranged so that at least a portion of the optical fiber port groups in the different groups overlap the direction perpendicular to the port arrangement direction. Therefore, the input/output optical paths between the light input/output ports and the optical path manipulation unit can be shortened, and the space occupied by the input/output optical paths between the light input/output ports and the optical path manipulation unit can be more easily reduced by adjusting the angle between the optical fiber port groups. As a result, it is possible to obtain the same functions and effects as those of the above-described first embodiment and to easily increase the number of light input/output ports, and it is possible to further facilitate a decrease in size of the optical switch and a decrease in cost.

Next, a fourth embodiment of the present invention will be described. In the above-described first to third embodiments, a 2-in-1 optical switch where two different optical switch functions are included in one apparatus is exemplified. In the fourth embodiment, a 3-in-1 optical switch is configured where three different optical switch functions are included in one apparatus.

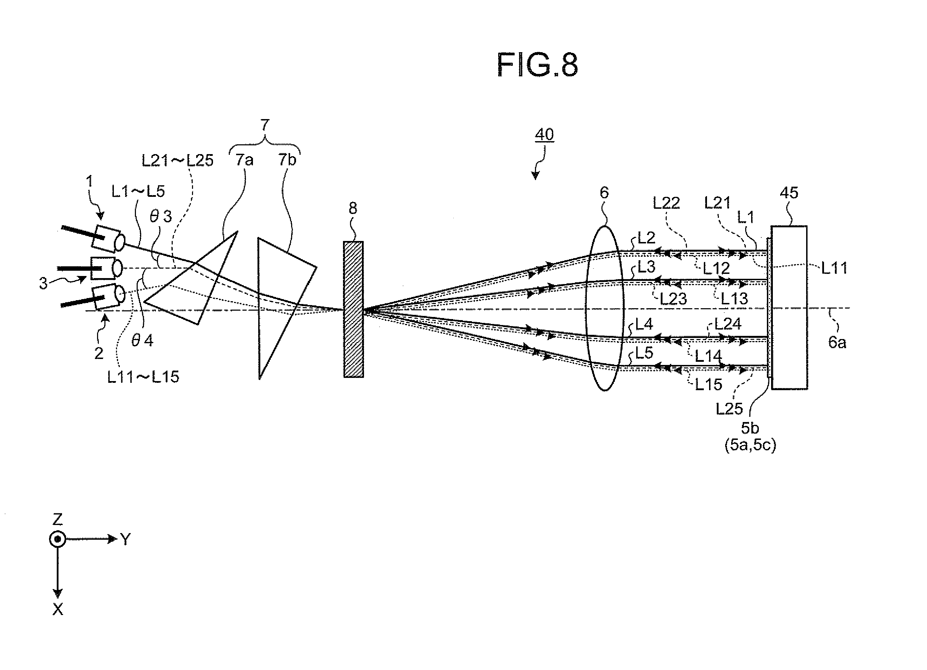

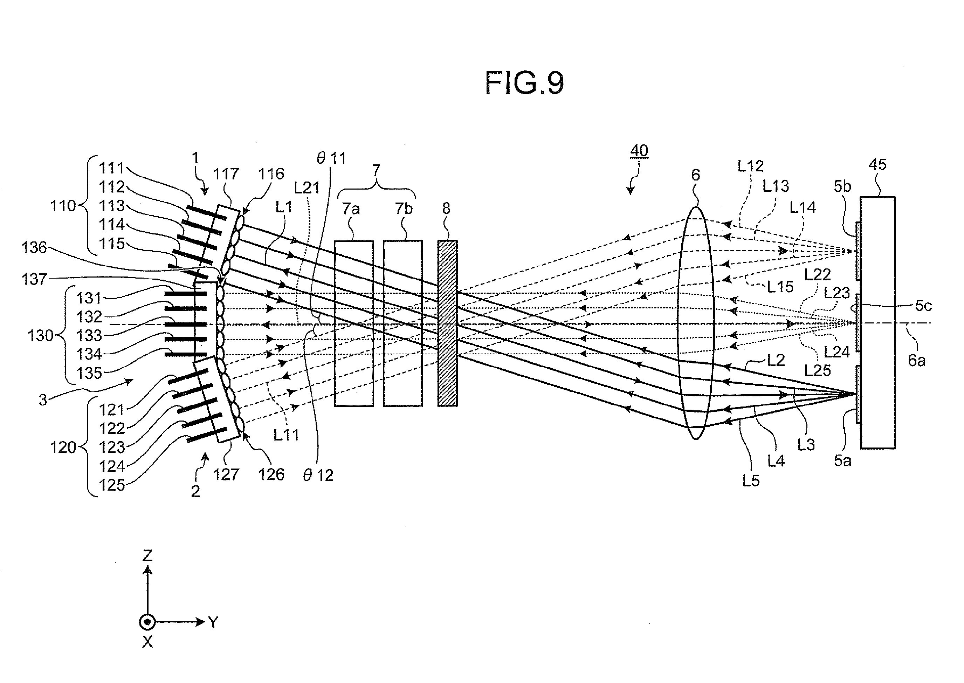

FIG. 8 is a schematic diagram illustrating a configuration example of the optical switch according to the fourth embodiment of the present invention. In FIG. 8, the optical switch according to the fourth embodiment is illustrated as seen from the positive direction in the Z axis direction of the XYZ coordinate system. FIG. 9 is a diagram illustrating the optical switch illustrated in FIG. 8 as seen from the positive direction in the X axis direction of the XYZ coordinate system. As illustrated in FIGS. 8 and 9, a optical switch 40 according to the fourth embodiment is configured include an optical path manipulation unit 45 instead of the optical path manipulation unit 5 of the optical switch 10 according to above-described first embodiment and to further include a light input/output port 3 different from the above-described light input/output ports 1 and 2. In addition, in the optical switch 40, the three different light input/output ports 1, 2, and 3 are arranged in three rows along the port arrangement direction, that is, the Z axis direction. The other configurations are the same as those of the first embodiment, and the same components are denoted by the same reference numerals.

Each of the plurality of light input/output ports 1 to 3 is configured to include port groups of being input with a light and outputting a light, so that each port group is input with a light from an external portion or outputs a light to an external portion. The light input/output port 3 is configured to include an optical fiber port group 130, a collimating lens group 136 including a plurality of collimating lenses, and a supporting portion 137 supporting the optical fiber port group 130 and the collimating lens group 136. The optical fiber port group 130 is a light input/output port group including a plurality of optical fiber ports 131 to 135. Each of the optical fiber ports 131 to 135 is configured by using an optical fiber functioning as an optical waveguide. Each of the optical fiber ports 131, 132, 133, 134, and 135 is arranged in a predetermined arrangement direction, that is, along a direction parallel to the YZ plane illustrated in FIG. 9 with a predetermined interval (for example, an equal interval). Particularly, as illustrated in FIG. 9, the optical fiber ports 131, 132, 133, 134, and 135 are arranged along the arrangement direction of the light input/output ports 1, 2, and 3, that is, the Z-axis direction.

The collimating lens group 136 is configured to include collimating lenses arranged corresponding to the optical fiber ports 131 to 135. The collimating lens group 136 has a function of allowing the light output from each of the optical fiber ports 131 to 135 to be a parallel light or a function of condensing the input parallel light on each of the optical fiber ports 131 to 135 and coupling the light.

Herein, as illustrated in FIGS. 8 and 9, the light input/output ports 1 to 3 are arranged in three rows along the port arrangement direction (Z-axis direction). In the light input/output ports 1 to 3, the optical fiber port group 110, the optical fiber port group 120, and the optical fiber port group 130 are grouped according to the light input/output ports 1 to 3 to be arranged in three rows along the Z-axis direction. In addition, as illustrated in FIG. 8, the light input/output ports 1 to 3 are not parallel to each other as seen from the Z-axis direction. Namely, the optical fiber port group 110 of the light input/output port 1 and the optical fiber port group 130 of the light input/output port 3 are not parallel to each other to have a predetermined angle θ3 as seen from the Z-axis direction. The optical fiber port group 130 of the light input/output port 3 and the optical fiber port group 120 of the light input/output port 2 are not parallel to each other to have a predetermined angle θ4 as seen from the Z-axis direction. Among the different optical fiber port groups 110, 120, and 130, the optical fiber ports 111 to 115 and the optical fiber ports 131 to 135 have the angle θ3 in the plane perpendicular to the Z-axis direction (for example, in the XY plane), and the optical fiber ports 131 to 135 and the optical fiber ports 121 to 125 have the angle θ4 in the plane perpendicular to the Z-axis direction. In addition, similarly to the case of the above-described third embodiment, the angles θ3 and θ4 are decreased as passing the anamorphic prisms 7a and 7b from the light input/output ports 1 to 3, so that the angles θ3 and θ4 approximates a value of about zero between the anamorphic prism 7b and the wavelength dispersion element 8.

In addition, in the three different light input/output ports 1 to 3, each of the optical fiber ports 111 to 115, 121 to 125, and 131 to 135 in the optical fiber port groups 110 to 130 are parallel to each other in the same port group and are not parallel to each other between the different port groups as seen from the direction (X-axis direction) perpendicular to the port arrangement direction. More specifically, as illustrated in FIG. 9, the optical fiber ports 131 to 135 included in the same optical fiber port group 130 are parallel to each other. On the other hand, as illustrated in FIG. 9, the optical fiber ports 111 to 115 and the optical fiber ports 131 to 135 between the different optical fiber port groups 110 and 130 are not parallel to each other and have a predetermined angle in the plane parallel to the port arrangement direction (Z-axis direction). For example, as illustrated in FIG. 9, the optical fiber port 111 in the optical fiber port group 110 is not parallel to each of the optical fiber ports 131 to 135 in the optical fiber port group 130 and have an angle θ11 with respect to each of the optical fiber ports 131 to 135 in the plane parallel to the Z-axis direction. This is the same in the remaining optical fiber ports 112 to 115 and 131 to 135. In addition, as illustrated in FIG. 9, the optical fiber ports 121 to 125 and the optical fiber ports 131 to 135 between the different optical fiber port group 120 and 130 are not parallel to each other and have a predetermined angel in the plane parallel to the port arrangement direction (Z-axis direction). For example, as illustrated in FIG. 9, the optical fiber port 125 in the optical fiber port group 120 is not parallel to each of the optical fiber ports 131 to 135 in the optical fiber port group 130 and an angle θ12 with respect to each of the optical fiber ports 131 to 135 in the plane parallel to the Z-axis direction. This is the same in the remaining optical fiber ports 121 to 124 and 131 to 135.

In addition, at least a portion of the three light input/output ports 1 to 3 is arranged along the direction (that is, the X-axis direction) perpendicular to the port arrangement direction. For example, as illustrated in FIG. 9, the optical fiber port group 130 in the light input/output ports 1 to 3 is arranged so as to overlap a portion of the optical fiber port groups 110 and 120 in the X-axis direction.

In addition, the above-described optical fiber ports 111 to 115, 121 to 125, and 131 to 135 corresponding to the light input/output ports 1 to 3 are input with lights (for example, signal lights for optical communication in a wavelength range of 1520 nm to 1620 nm) from an external portion or outputs lights to an external portion. The arrangement of the optical fiber port groups 110 and 120 of the light input/output ports 1 and 2 in the three light input/output ports 1 to 3 is the same as that of the case of the above-described first embodiment. In addition, in the fourth embodiment, the light input/output port 3 is arranged so as to be parallel to the optical axis 6a of the condenser lens 6 as seen from any one of the X-axis direction and the Z-axis direction. Namely, each of the optical fiber ports 131 to 135 in the optical fiber port group 130 is substantially parallel to the optical axis 6a of the condenser lens 6 as seen from any one of the X-axis direction and the Z-axis direction. In the optical fiber port group 130, for example, the optical fiber port 133 at the center thereof is arranged so as to be substantially coincident with the optical axis 6a.

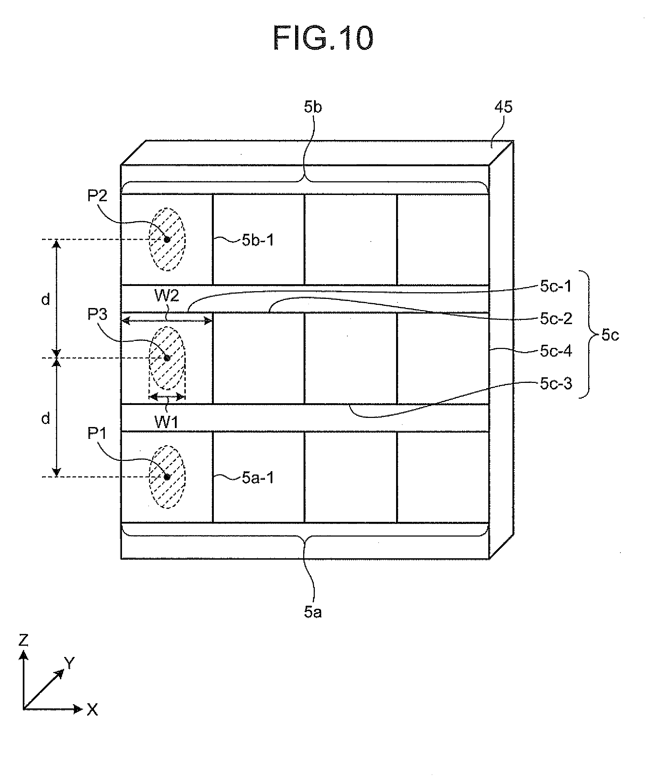

The optical path manipulation unit 45 is configured to include a plurality of the optical path switching units 5a, 5b, and 5c, each of which switches the optical path of the input a light ray, and manipulates the optical paths of the lights from the input ports to the output ports corresponding to the light input/output ports 1 to 3. As illustrated in FIG. 9, the optical path switching units 5a, 5b, and 5c are arranged to be separated in the Z-axis direction according to the different light input/output ports 1, 2, and 3. FIG. 10 is a schematic diagram illustrating a configuration example of a plurality of the optical path switching units in the fourth embodiment. As illustrated in FIG. 10, the optical path switching unit 5c is configured to include a plurality of LCOSs 5c-1, 5c-2, 5c-3, and 5c-4 arranged in the X axis direction. In addition, the optical path switching units 5a and 5b of the optical path manipulation unit 45 have substantially the same configuration as that of the case of the above-described first embodiment. The optical path switching units 5a to 5c are installed in the optical path manipulation unit 45 to correspond to the arrangement of the optical fiber port groups 110 to 130 in the Z-axis direction. For example, as illustrated in FIGS. 9 and 10, the optical path switching unit 5a, the optical path switching unit 5c, and the optical path switching unit 5b are disposed in this order in the positive direction of the Z axis. In addition, the optical path switching unit 5c corresponding to the optical fiber port group 130 is arranged between the optical path switching unit 5a corresponding to the optical fiber port group 110 and the optical path switching unit 5b corresponding to the optical fiber port group 120,

Each of the optical path switching units 5a to 5c having the above-described configuration switches the optical path of the light input from the input port in one of the optical fiber port groups 110 to 130 to the optical path toward the output port in the same optical fiber port group including the input port with respect to the light input/output ports 1 to 3. Namely, each of the LCOSs 5c-1, 5c-2, 5c-3, and 5c-4 has a function of diffracting the light input from the input port in the optical fiber port group 130 of the light input/output port 3 and outputting the light toward the output port in the same optical fiber port group 130. In addition, the input port in the optical fiber port group 130 is any one of the optical fiber ports 131 to 135, and the output port in the optical fiber port group 130 is any one of the optical fiber ports 131 to 135 excluding the input port. On the other hand, the functions of the remaining LCOSs 5a-1 to 5a-4 and 5b-1 to 5b-4 are the same as those of the above-described case of the first embodiment.

Herein, the light input from the light input/output ports 1 to 3 to the optical path manipulation unit 45 are separated from each other in the Z-axis direction so as not to interfere each other at the above-described optical path switching units 5a to 5c. For example, as illustrated in FIG. 10, an imaging point P3 of the light input from the light input/output port 3 to the LCOS 5c-1 of the optical path switching unit 5c is sufficiently separated from an imaging point P1 of the lights input from the light input/output port 1 to the LCOS 5a-1 of the optical path switching unit 5a and an imaging point P2 of the light input from the light input/output port 2 to the LCOS 5b-1 of the optical path switching unit 5b. Namely, the separation distance d from the imaging point P3 and each of the imaging point P1 and P2 is sufficiently large in comparison to the dimension of the beam spot (refer to a hatching portion of FIG. 10) of each light in the Z-axis direction. In addition, the imaging point P1 and the imaging point P2 are sufficiently separated from each other with the imaging point P3 interposed therebetween. As a result, the interference with the lights is avoided. This is the same with respect to the remaining LCOSs 5a-2 to 5a-4, 5b-2 to 5b-4, and 5c-2 to 5c-4. The LCOSs 5a-1 to 5a-4, 5b-1 to 5b-4, and 5c-1 to 5c-4 are arranged on the optical path manipulation unit 45 to correspond to the imaging points of the lights of the light input/output ports 1 to 3. More specifically, similarly to the case of the above-described third embodiment, since the input/output optical paths between the condenser lens 6 and the optical path manipulation unit 45 are shifted from each other, each of the condensing positions of the lights condensed on the optical path switching units 5a to 5c is slightly shifted in the X-axis direction (wavelength dispersion direction). In accordance with the shift of the condensing positions, the LCOSs 5a-1 to 5a-4, 5b-1 to 5b-4, and 5c-1 to 5c-4 are arranged on the optical path manipulation unit 45 to be slightly shifted in the X-axis direction.

In addition, similarly to the case of the above-described LCOSs 5a-1 to 5a-4 and 5b-1 to 5b-4, the beam shapes of the lights input to the LCOSs 5c-1 to 5c-4 are shaped to be in an elliptical shape which is reduced in the X-axis direction due to the function of the anamorphic optical system 7 (refer to the hatching portion of FIG. 10). The widths W2 of the LCOSs 5c-1 to 5c-4 are sufficiently larger than the widths W1 of the lights having the elliptical shape.

In the optical switch 40 having the above-described configuration, for example, the optical fiber port 133 in the optical fiber port group 130 is set as a Com port to which a light is input from an external portion. Herein, the optical fiber port 133 is the port arranged at the center in the optical fiber port group 130. As illustrated in FIG. 9, the optical fiber port 133 is arranged so as to be substantially coincident with the optical axis 6a of the condenser lens 6. In addition, the remaining four optical fiber ports 131, 132, 134, 135 in the optical fiber port group 130 are set as optical fiber ports which output a light to an external portion. In addition, the settings of the Com port and the output ports in the optical fiber port groups 110 and 120 are the same as those of the above-described case of the first embodiment.

Herein, in a case where the signal light having a predetermined wavelength is input from the optical fiber port 133 in the light input/output port 3, the optical switch 40 can be operated so that the signal light is output from the optical fiber port allocated to the wavelength in the optical fiber ports 131, 132, 134, and 135 in the same light input/output port 3. In addition, similarly to the above-described first embodiment, in a case where the signal light having a predetermined wavelength is input from the optical fiber port 113 in the light input/output port 1, the optical switch 40 performs the optical switch operations using the light input/output port 1; and in a case where the signal light having a predetermined wavelength is input from the optical fiber port 123 in the light input/output port 2, the optical switch 40 performs the optical switch operations using the light input/output port 2. Namely, the optical switch 40 functions as a 3-in-1 optical switch where three different $1 \times 4$ optical switch functions corresponding to the light input/output ports are included in one apparatus.

Particularly, in the case where the signal light input from the optical fiber port 133 is a 4-channel WDM signal light including four signal lights having different wavelengths, the optical switch 40 can be operated so that the signal light of each of the channels included in the WDM signal light is output from the optical fiber port allocated to each of the channels among the optical fiber ports 131, 132, 134, and 135. In addition, similarly to the above-described first embodiment, in the case where the signal light input from the optical fiber port 113 is a 4-channel WDM signal light, the optical switch 40 performs the wavelength selective switch operation using the light input/output port 1; and in the case where the signal light input from the optical fiber port 123 is a 4-channel WDM signal light, the optical switch 40 performs the wavelength selective switch operation using the light input/output port 2. In this case, the optical switch 40 functions as a 3-in-1 wavelength selective switch where three different $1 \times 4$ wavelength selective switch functions corresponding to the light input/output ports are included in one apparatus.

Next, the operations of the optical switch 40 will be described with reference to FIGS. 8 to 10. In the fourth embodiment, the optical switch operation (including the wavelength selective switch operation) using the light input/output port 1 and the optical switch operation (including the wavelength selective switch operation) using the light input/output port 2 are the same as those of the above-described first embodiment. Therefore, hereinafter, the optical switch operations using the light input/output port 3 will be described. In addition, the three optical switch operations are performed independently. Namely, the three optical switch operations are performed without a specified performing order between the light input/output ports 1 to 3.

First, when a signal light L21 having a wavelength λ21 is input from an external portion to the optical fiber port 133, the collimating lens group 136 allows the input signal light L21 to be a substantially parallel light of which beam shape is substantially circular. Next, the anamorphic optical system 7 shapes the beam of the signal light L21, which is a substantially parallel light, to be in an elliptical shape by enlarging the beam shape in the X-axis direction. Next, the wavelength dispersion element 8 diffracts the shaped signal light L21 with the diffraction angle corresponding to the wavelength λ21. Next, the condenser lens 6 condenses the diffracted signal light L21 on the optical path switching unit 5c of the optical path manipulation unit 45 (more specifically, the LCOS 5c-1 illustrated in FIG. 10). The LCOS 5c-1 as a component of the optical path switching unit 5c diffracts the condensed signal light L21 with the diffraction angle set corresponding to the wavelength λ21, so that the LCOS 5c-1 outputs (reflects) the signal light L21 as a signal light L22 having the wavelength λ21. The condenser lens 6 passes the signal light L22 output from the optical path switching unit 5c toward the light input/output port 3 and allows the optical path to be parallel to the optical path of the signal light L21. In addition, the optical paths of the signal light L21 and the signal light L22 before and after the switching of the optical paths are slightly shifted from each other in the X-axis direction. However, for the simplification, in FIG. 8, the optical paths are illustrated so as to substantially overlap each other.

Next, the wavelength dispersion element 8 diffracts the signal light L22 input from the condenser lens 6 again. Next, the anamorphic optical system 7 returns the beam shape of the signal light L22 to a substantially circular shape by reducing the beam shape in the X-axis direction and passes the signal light L22 to the light input/output port 3. For example, as illustrated in FIG. 9, the anamorphic optical system 7 and the wavelength dispersion element 8 keep the optical path of the signal light L21 and the optical path of the signal light L22 parallel. Next, the signal light L22 is input to the collimating lens corresponding to the optical fiber port 131 allocated to the wavelength λ21 in the collimating lens group 136. The corresponding collimating lens condenses the signal light L22 to be coupled with the optical fiber port 131. The optical fiber port 131 outputs the coupled light, that is, the signal light L22 having the wavelength λ21 to an external portion.

In this manner, the optical switch 40 can switch the optical path of the signal light input from the optical fiber port 133, which is a Com port of the light input/output port 3, to the optical path which reaches the optical fiber port 131 (output port in the same light input/output port 3) allocated to the wavelength λ21.

In addition, when the wavelength of the signal light L21 input from an external portion to the optical fiber port 133 is λ22, λ23, or λ24, similarly to the above-described case of the wavelength λ21, after the signal light L21 passes through the anamorphic optical system 7 and the like, the signal light L21 is diffracted with the diffraction angle corre-

sponding to the wavelength ($\lambda$22, $\lambda$23, or $\lambda$24) by the wavelength dispersion element 8. In addition, the wavelengths $\lambda$21, $\lambda$22, $\lambda$23, and $\lambda$24 are different from each other. The diffracted signal light L21 reaches the condenser lens 6. The condenser lens 6 condenses the signal light L21 toward the LCOS portion corresponding to the wavelength of the signal light L21 in the optical path switching unit 5c. Namely, the condenser lens 6 condenses the signal light L21 having the wavelength $\lambda$22 on the LCOS 5c-2, condenses the signal light L21 having the wavelength $\lambda$23 on the LCOS 5c-3, or condenses the signal light L21 having the wavelength $\lambda$24 on the LCOS 5c-4. The LCOS 5c-2 diffracts the signal light L21 with the diffraction angle set corresponding to the wavelength $\lambda$22 and switches the optical path of the signal light L21 to the optical path of a signal light L23 having the wavelength $\lambda$22. Alternatively, the LCOS 5c-3 diffracts the signal light L21 with the diffraction angle set corresponding to the wavelength $\lambda$23 and switches the optical path of the signal light L21 to the optical path of a signal light L24 having the wavelength $\lambda$23. Alternatively, the LCOS 5c-4 diffracts the signal light L21 with the diffraction angle set corresponding to the wavelength $\lambda$24 and switches the optical path of the signal light L21 to the optical path of a signal light L25 having the wavelength $\lambda$24.

Similarly to the case of the above-described wavelength $\lambda$21, the signal light (that is, any one of the signal light L23 to L25) after the switching of the optical path sequentially passes through the condenser lens 6, the wavelength dispersion element 8, the anamorphic optical system 7, and the collimating lens group 136. The signal light after the passing through the collimating lens is output from the optical fiber port corresponding to the wavelength in the optical fiber port group 130 to an external portion. Namely, the signal light L23 having the wavelength $\lambda$22 is output from the optical fiber port 132 allocated to the wavelength $\lambda$22 to an external portion; the signal light L24 having the wavelength $\lambda$23 is output from the optical fiber port 134 allocated to the wavelength $\lambda$23 to an external portion; and the signal light L25 having the wavelength $\lambda$24 is output from the optical fiber port 135 allocated to the wavelength $\lambda$24 to an external portion.

Particularly, in the case where the signal light L21 input from an external portion to the optical fiber port 133 is a 4-channel WDM signal light including signal light having wavelengths $\lambda$21, $\lambda$22, $\lambda$23, and $\lambda$24, similarly to the above-described case of the signal lights having wavelengths $\lambda$21 to $\lambda$24, the optical path of the WDM signal light can be switched to the optical path of the signal light L22 having the wavelength $\lambda$21, the optical path of the signal light L23 having the wavelength $\lambda$22, the optical path of the signal light L24 having the wavelength $\lambda$23, and the optical path of the signal light L25 having the wavelength $\lambda$24. Next, the signal light L22 to L25 originated from the WDM signal light are output from the optical fiber ports 131, 132, 134, and 135 allocated to the wavelengths $\lambda$21, $\lambda$22, $\lambda$23, and $\lambda$24 to an external portion. In this manner, the optical switch 40 can perform the switching of desired optical paths selected according to the wavelength in the light input/output port 3.

In addition, the LCOSs 5c-1 to 5c-4 (refer to FIG. 10) constituting the above-described optical path switching unit 5c have well-known configurations, similarly to the LCOSs 5a-1 to 5a-4 and 5b-1 to 5b-4 exemplified in the first embodiment. Therefore, it is preferable that the positional relationship between the condenser lens 6 and the optical path manipulation unit 45 be set so that the beam shape (refer to the broken-line portion of FIG. 10) of the signal light incident on each of the LCOSs 5c-1 to 5c-4 is elongated in the Z-axis direction. Accordingly, since the number of pixel electrodes being contributed to diffraction of the signal light can be increased, it is possible to improve diffraction efficiency. In addition, since a phase difference between adjacent pixels can be decreased by reducing a pixel width of each of the LCOSs 5c-1 to 5c-4, it is possible to suppress an increase in diffraction angle for each LCOS.

Next, the input/output optical paths between the light input/output ports 1 to 3 and the condenser lens 6 in the fourth embodiment will be described. In addition, in the fourth embodiment, the input/output optical paths of the light input/output ports 1 and 2 are the same as those of the above-described third embodiment. Therefore, hereinafter, the input/output optical paths of the light input/output port 3 will be described.

First, the input/output optical paths between the light input/output ports 1 to 3 and the condenser lens 6 as seen from the port arrangement direction (that is, the Z axis direction) will be described with reference to FIG. 8. The input/output optical paths of the signal lights L21 to L25 input and output at the light input/output port 3 are optical paths indicated by dotted-line arrows of FIG. 8 as seen from the Z-axis direction. Hereinafter, the input/output optical paths described with reference to FIG. 8 are paths as seen from the Z-axis direction.

As indicated by solid-line arrows, broken-line arrows, and dotted-line arrows of FIG. 8, the input/output optical paths of the light input/output port 3 are not parallel to the input/output optical paths of the light input/output ports 1 and 2 in the zones between the light input/output ports 1 to 3 and the anamorphic prism 7a and are substantially parallel to the optical axis 6a of the condenser lens 6. More specifically, as illustrated in FIG. 8, the input/output optical paths of the light input/output port 3 have an angle $\theta$3 with respect to each of the input/output optical paths of the light input/output port 1 and have an angle $\theta$4 with respect to each of the input/output optical paths of the light input/output port 2. Here, similarly to the case of the above-described third embodiment, in the input/output optical paths of the light input/output port 3, each of the angles $\theta$3 and $\theta$4 is decreased as passing through the anamorphic prisms 7a and 7b from the light input/output ports 1 to 3 toward the wavelength dispersion element 8. The input/output optical paths of the light input/output port 3 reach the wavelength dispersion element 8 as the angles $\theta$3 and $\theta$4 are decreased, and each of the input/output optical paths intersects the substantially central portion of the wavelength dispersion element 8. In this case, each of the angles θ3 and θ4 between the anamorphic prism 7b and the wavelength dispersion element 8 approximates a value of substantially zero.

In addition, the input/output optical paths of the light input/output port 3 between the wavelength dispersion element 8 and the condenser lens 6 have a predetermined angle with respect to the X-axis direction, that is, the wavelength dispersion direction of the wavelength dispersion element 8 and are not parallel to each other. Here, as illustrated in FIG. 8, each of the input/output optical paths intersects a substantially central portion of the wavelength dispersion element 8. In addition, the input/output optical paths between the wavelength dispersion element 8 and the condenser lens 6 have a positional relationship of substantially linear symmetry about the center of the optical axis 6a of the condenser lens 6. In addition, similarly to the case of the above-described third embodiment, the relative positional relationship between the light input/output ports 1 to 3 and the anamorphic prisms 7a and 7b is set so that the input/output optical paths intersect each other at the wavelength dispersion element 8. On the other hand, the input/output optical paths between the condenser lens 6 and the optical path manipulation unit 45 are shifted from each other. Therefore, when the lights of the input/output optical paths are condensed on the optical path switching units 5a to 5c of the optical path manipulation unit 45, each of the condensing positions is slightly (for example, to a degree of several pixels) shifted in the X-axis direction.

Next, the input/output optical path between the light input/output ports 1 to 3 and the condenser lens 6 as seen from the direction (that is, the X-axis direction) perpendicular to the port arrangement direction will be described with reference to FIG. 9. The input/output optical paths of the light input/output port 3 are optical paths indicated by dotted-line arrows of FIG. 9 as seen from the X-axis direction. Hereinafter, the input/output optical paths described with reference to FIG. 9 are paths as seen from the X-axis direction.

As indicated by solid-line arrows, broken-line arrows, and dotted-line arrows of FIG. 9, the input/output optical paths of the plural light input/output ports 1 to 3 with respect to the condenser lens 6 are parallel to each other between the optical fiber ports in the same optical fiber port group and are not parallel to each other between the optical fiber ports in the different optical fiber port groups as seen from the direction (X-axis direction) perpendicular to the port arrangement direction of the optical fiber port groups 110 to 130. Namely, the input/output optical paths of the light input/output port 3 are parallel to each other between the optical fiber ports 131 to 135 in the optical fiber port group 130. In addition, the input/output optical paths of the light input/output ports 1 to 3 are not parallel to each other between the optical fiber ports 111 to 115 and the optical fiber ports 131 to 135 of the different optical fiber port groups 110 and 130. Moreover, the input/output optical paths of the light input/output ports 1 to 3 are not parallel to each other between the optical fiber ports 121 to 125 and the optical fiber ports 131 to 135 of the different optical fiber port groups 120 and 130.

In addition, as illustrated in FIG. 9, the input/output optical paths of the light input/output port 3 are disposed in the zone between the light input/output port 3 and the condenser lens 6, so that optical influence of the anamorphic optical system 7 and the wavelength dispersion element 8 in the Z-axis direction is not large. Namely, in the zone, the signal lights L21 to L25 on the input/output optical paths of the light input/output port 3 are little refracted or diffracted in the Z-axis direction by the anamorphic optical system 7 or the wavelength dispersion element 8.

In addition, as illustrated in FIG. 9, the input/output optical path corresponding to the optical fiber port group 110, the input/output optical path corresponding to the optical fiber port group 120, and the input/output optical path corresponding to the optical fiber port group 130 intersect each other in the zone between the light input/output ports 1 to 3 and the condenser lens 6. More specifically, the optical paths of the lights input from the three different optical fiber port groups 110, 120, and 130 in the light input/output ports 1 to 3 intersect each other in the vicinity of the focal point of the condenser lens 6. In addition, in the fourth embodiment, the wavelength dispersion element 8 is arranged in the vicinity of the focal point of the condenser lens 6. Namely, as illustrated in FIG. 9, the optical paths of the light intersect each other in the vicinity of the wavelength dispersion element 8.

As described above, the relative arrangement of the three light input/output ports 1 to 3 constituting the input/output optical paths is set by considering the intersection position of the input/output optical paths or the separation distance d between the imaging points in the optical path manipulation unit 45 (refer to FIG. 10), and the like.

More specifically, similarly to the case of the first embodiment, as illustrated in FIG. 9, the light input/output ports 1 and 2 are inclined with respect to the optical axis 6a of the condenser lens 6, and the light input/output port 3 is arranged to be parallel to the optical axis 6a. In this case, the optical fiber port groups 110 and 130 of the light input/output ports 1 and 3 are not parallel to each other and have a predetermined angle θ11 in the plane parallel to the Z-axis direction. The angle θ11 between the optical fiber port groups 110 and 130 is set so that the relative positional relationship among the light input/output ports 1 and 3, the condenser lens 6, and the optical path manipulation unit 45 is considered, and the separation distance d is a predetermined value or more. Due to the adjustment of the angle θ11, the separation distance d is set to a distance which is enough to prevent the interference between the light from the optical fiber port group 110 input to the optical path manipulation unit 45 and the light from the optical fiber port group 130. In addition, the optical fiber port groups 120 and 130 of the light input/output port 2 and 3 are not parallel to each other and have a predetermined angle θ12 in the plane parallel to the Z-axis direction. The angle θ12 between the optical fiber port groups 120 and 130 is set so that the relative positional relationship among the light input/output ports 2 and 3, the condenser lens 6, and the optical path manipulation unit 45 is considered and the separation distance d is a predetermined value or more. Due to the adjustment of the angle θ12, the separation distance d is set to a distance which is enough to prevent the interference between the light from the optical fiber port group 120 input to the optical path manipulation unit 45 and the light from the optical fiber port group 130.

Hereinbefore, as described, in the fourth embodiment of the present invention, the three different optical fiber port groups corresponding to the light input/output ports are arranged in three rows along the port arrangement direction, and three different optical switch functions are included in one optical switch apparatus; and the other configurations are the same as those of the first embodiment. Therefore, a degree of freedom in an arrangement of the three different optical fiber port groups is increased, and the three optical fiber port groups can be arranged so that at least a portion of the three optical fiber port groups overlap the direction perpendicular to the port arrangement direction. The space occupied by the input/output optical paths between the light input/output ports and the optical path manipulation unit can be further reduced by adjusting the angle between the optical fiber port groups. Therefore, it is possible to reduce sizes of optical parts commonly shared in the three different optical switch functions corresponding to the light input/output ports. As a result, it is possible to obtain the same functions and effects as those of the above-described first embodiment, and it is possible to easily configure a 3-in-1 optical switch including a 3-in-1 wavelength selective switch and to facilitate a decrease in size of the apparatus and a decrease in cost.

Next, a fifth embodiment will be described. In the fifth embodiment, the distance between the light input/output port 1 and the anamorphic optical system 7 and the distance between the light input/output port 2 and the anamorphic optical system 7 are different from each other.

Namely, the configuration between the anamorphic optical system 7 and the optical path manipulation unit 5 in the fifth embodiment is the same as that of the third embodiment. Therefore, hereinafter, the description of the configuration between the anamorphic optical system 7 and the optical path manipulation unit 5 will not be presented by referring the same reference numerals as those of the third embodiment.

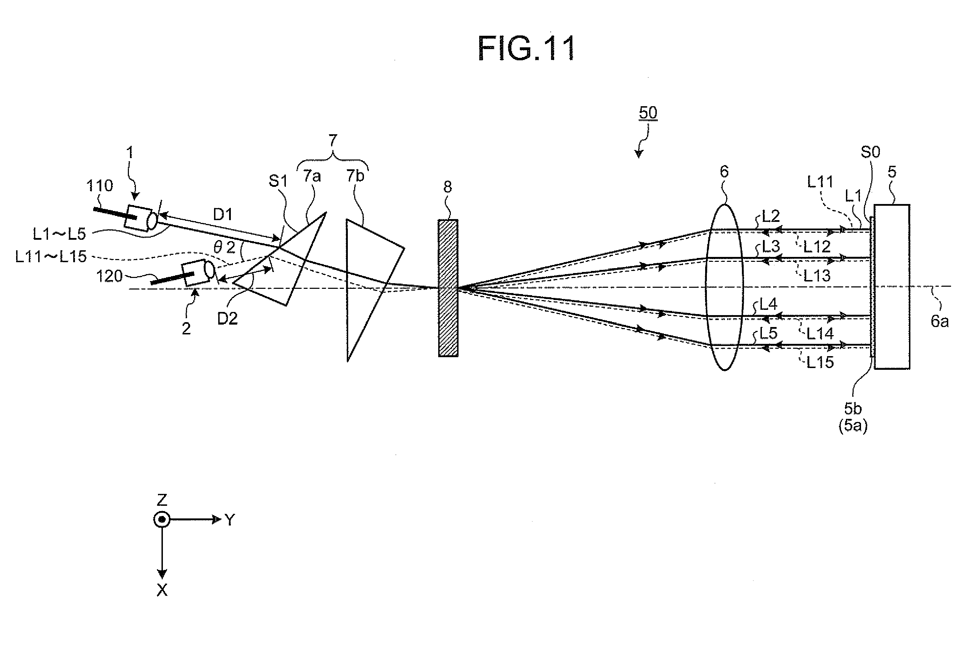

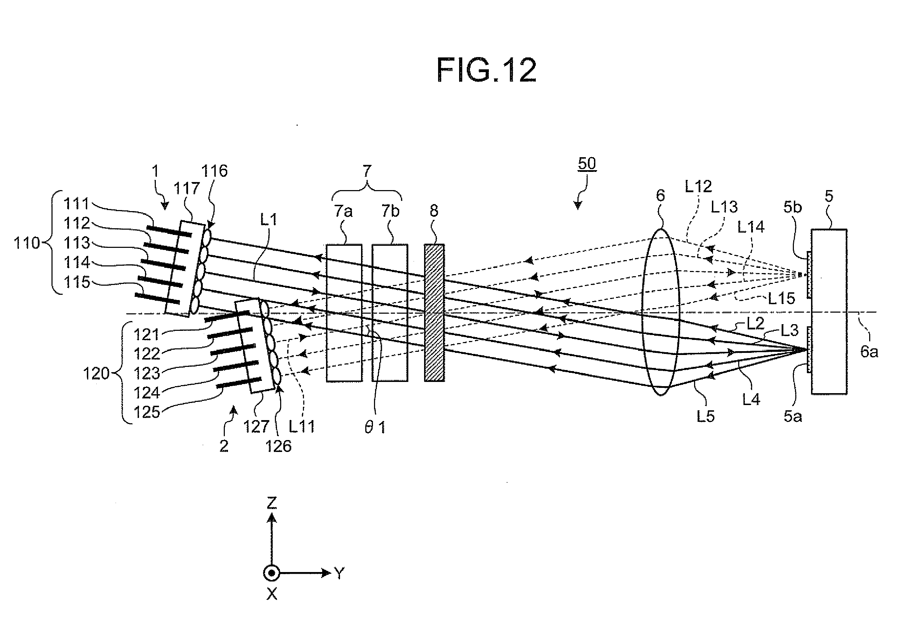

FIG. 11 is a schematic diagram illustrating one configuration of an optical switch 50 according to the fifth embodiment. In FIG. 11, the optical switch 50 according to the fifth embodiment is illustrated as seen from the positive direction in the Z axis direction of the XYZ coordinate system. FIG. 12 is a diagram illustrating the optical switch illustrated in FIG. 11 as seen from the positive direction in the X axis direction of the XYZ coordinate system. In the XYZ coordinate system of FIGS. 11 and 12, the X axis is set to the axis perpendicular to the port arrangement direction of the optical switch 50; the Y axis is set to the optical axis direction of the entire optical path; and the Z axis is set to the port arrangement direction of the optical switch 50.

As illustrated in FIGS. 11 and 12, the light input/output ports 1 and 2 of the optical switch 50 according to the fifth embodiment are arranged so that the position of the light input/output port 1 is shifted in the direction of the input/output optical path instead of the arrangement exemplified in the above-described third embodiment.

As illustrated in FIG. 11, in the fifth embodiment, directions of the input/output optical paths of the light input/output ports 1 and 2 are not parallel to each other as seen from the Z-axis direction. As a result, as illustrated in FIG. 11, the two light input/output ports 1 and 2 are arranged at different positions in the X-axis direction.

In addition, the optical fiber port group 110 of the light input/output port 1 and the optical fiber port group 120 of the light input/output port 2 are not parallel to each other and have a predetermined angle θ2 as seen from the Z-axis direction (refer to FIG. 11). The optical fiber ports 111 to 115 and the optical fiber ports 121 to 125 between the different optical fiber port groups 110 and 120 have an angle θ2 in the plane perpendicular to the Z-axis direction (for example, in the XY plane).

In the fifth embodiment illustrated in FIG. 11, the angle of the light input/output ports 1 and 2 is changed. However, when the input/output optical paths with respect to the anamorphic optical system 7 are not parallel to each other between the ports in the different optical fiber port groups 110 and 120 as seen from the Z-axis direction, an embodiment of the present invention can be appropriately performed. Namely, for example, although the angle of the light input/output ports 1 and 2 is parallel, the angle of the input/output optical paths can be configured to be changed by arranging a prism or the like between the light input/output ports 1 and 2 and the anamorphic optical system 7 or by uniformly offsetting the collimating lens groups of the light input/output ports 1 and 2.

In addition, as illustrated in FIG. 12, with respect to the directions of the input/output optical paths of the light input/output ports 1 and 2, each of the input/output optical paths is not parallel to the optical axis 6a of the condenser lens 6 and has a predetermined angle. Namely, the optical fiber ports 111 to 115 and 121 to 125 in the optical fiber port groups 110 and 120 are parallel to each other in the same port group as seen from the X-axis direction and are not parallel to each other between the different port groups and have an angle θ1 in the plane parallel to the Z-axis direction.

As illustrated in FIGS. 11 and 12, the distance between the light input/output port 1 and the anamorphic optical system 7 and the distance between the light input/output port 2 and the anamorphic optical system 7 are different. More specifically, the distance between the light input/output port 1 and the anamorphic optical system 7 is larger than the distance between the light input/output port 2 and the anamorphic optical system 7. Here the light input/output port 1 is the input/output port where the incident angle to the first plane of the anamorphic prism 7a constituting the anamorphic optical system 7 (planes of the side of the light input/output ports 1 and 2) is small. In the fifth embodiment illustrated in FIG. 11, the distance between the light input/output port 1 and the anamorphic optical system 7 is D1, and the distance between the light input/output port 2 and the anamorphic optical system 7 is D2. The D1 and D2 satisfy the relation of D1 > D2.

In addition, the distances D1 and D2 between the light input/output ports 1 and 2 and the anamorphic optical system 7 may not be actual distances, and optical distances may be employed. Namely, effective distances D1 and D2 between the light input/output ports 1 and 2 and the anamorphic optical system 7 may be changed by arranging an optical member such as a glass of which refractive index is higher than air on the optical paths. In addition, the configuration capable of obtaining the functions and effects of the fifth embodiment may also be implemented by adjusting the focal lengths or positions of the collimating lens groups 116 and 126 included in the light input/output ports 1 and 2.

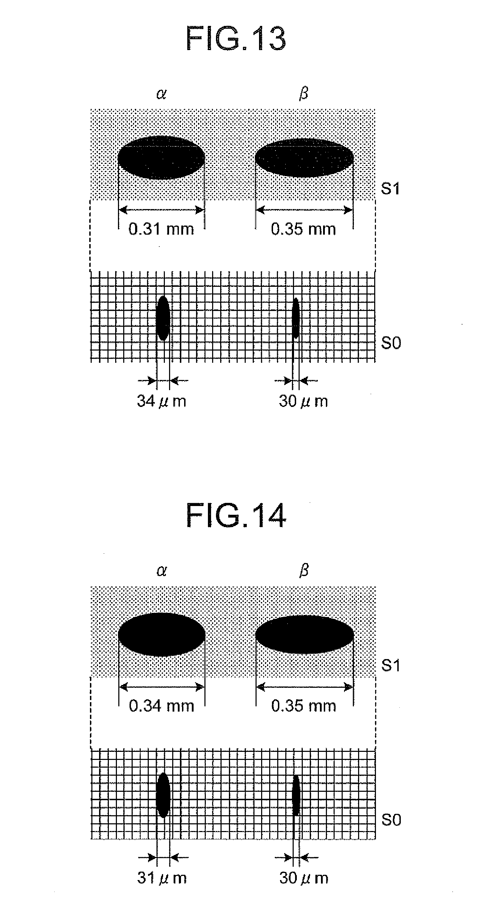

Hereinafter, the optical function generated from the configuration of the fifth embodiment will be described with reference to FIGS. 13 and 14.

FIGS. 13 and 14 are diagrams illustrating comparison of beam spots of optical signals which are input and output through the light input/output port 1 and the light input/output port 2 on the first plane S1 of the anamorphic prism 7a and the surfaces S0 (surfaces of the LCOSs) of the optical switching units 5a and 5b. FIG. 13 illustrates the case where the light input/output ports 1 and 2 are arranged in substantially the same distance from the anamorphic optical system 7 and corresponds to a comparative example of the case where the fifth embodiment is not employed. On the other hand, FIG. 14 illustrates the case where the light input/output ports 1 and 2 are arranged in different distances from the anamorphic optical system 7 and corresponds to an example of the fifth embodiment.

In FIGS. 13 and 14, symbols $\alpha$ and $\beta$ denote a beam spot of an optical signal which is input and output through the light input/output port 1 and a beam spot of an optical signal which is input and output through the light input/output port 2, respectively. Namely, the beam spot indicated by the symbol $\alpha$ is a beam spot of an optical signal which is input and output through the light input/output port 1 where the incident angle of the input/output optical path to the first plane of the anamorphic prism 7a is small, and the beam spot indicated by the symbol $\beta$ is a beam spot of an optical signal which is input and output through the light input/output port 2 where the incident angle of the input/output optical path to the first plane of the anamorphic prism 7a is large.

In addition, in FIGS. 13 and 14, the values of long and short diameters of the beam spot are defined by the position where light intensity becomes $1/e^2$. However, the values of the long and short diameters of the beam spot illustrated in FIGS. 13 and 14 are exemplary ones for the description of the function. The effect of the fifth embodiment can be obtained without limitation to the values illustrated in FIGS. 13 and 14.

As illustrated in FIG. 13, on the first plane S1 of the anamorphic prism 7a, the long diameter of the beam spot indicated by "$\alpha$" is shorter than the long diameter of the beam spot indicated by "$\beta$". This denotes that the incident angle of the signal light incident from the light input/output port 2 to the first plane S1 of the anamorphic prism 7a is larger than the incident angle of the signal light incident from the light input/output port 1 to the first plane S1 of the anamorphic prism 7a.

This is because, since the signal light is incident on the first plane S1 of the anamorphic prism 7a at an inclined angle, although the transverse shape of the signal light before the incidence is a perfectly circular shape, the shape of the beam spot becomes an elliptical shape. In addition, in the elliptical shape, the enlargement ratio in the direction of the long diameter is increased as the incident angle to the first plane S1 of the anamorphic prism 7a is increased.

As described above, since the long diameters of the beam spots on the first plane of the anamorphic prism 7a are different, as illustrated in FIG. 13, the short diameter of the beam spot indicated by $\alpha$ is longer than the short diameter of the beam spot indicated by $\beta$ on the surface S0 of the LCOS. This is because, when the signal light is condensed on the surface S0 of the LCOS by the condenser lens 6, the signal light having a large diameter of light flux incident on the condenser lens 6 is allowed to more strongly converge on the surface S0 of the LCOS.

With respect to the signal light of the light input/output port 2, which has a long diameter of the beam spot on the first plane S1 of the anamorphic prism 7a, after the signal light is enlarged by the anamorphic optical system 7, when the enlarged signal light is incident on the condenser lens 6, the long diameter of the light flux thereof is also increased, so that the signal light is allowed to more strongly converge on the surface S0 of the LCOS by the condenser lens 6. In addition, here, for the purpose of qualitative description, it is considered that there is no influence on the difference in magnification of the anamorphic optical system 7.

The short diameter of the beam spot on the surface S0 of the LCOS influences the transmission spectrum bandwidth in terms of performance of the optical switch 50. This is because the direction of the short diameter of the beam spot on the surface S0 of the LCOS corresponds to the diffraction direction of the diffraction grating 8 and the area where the beam can be switched without leakage of energy to adjacent channels in the pixel width allocated to any channel is increased to an extent that the short diameter of the beam spot on the surface S0 of the LCOS is allowed to be small.

Namely, conversely, the result illustrated in FIG. 13 denotes that, in the light input/output ports 1 and 2 are arranged in the same distance from the anamorphic optical system 7, a difference in performance occurs between the light input/output port 1 and the light input/output port 2 in terms of performance of the bandwidth of the optical switch 50.

On the other hand, as illustrated in FIG. 14, in the fifth embodiment, the long diameter of the beam spot indicated by "α" is substantially the same as the long diameter of the beam spot indicated by "β" on the first plane S1 of the anamorphic prism 7a. This is because the distance from the light input/output port 1 to the first plane of the anamorphic prism 7a is increased.

As a result, as illustrated in FIG. 14, the short diameter of the beam spot indicated by "α" is substantially the same as the short diameter of the beam spot indicated by "β" on the surface S0 of the LCOS. As described above, in terms of the performance of the optical switch 50, the short diameter of the beam spot on the surface S0 of the LCOS influences the bandwidth. Therefore, in the optical switch 50 according to the fifth embodiment, the difference in performance between the light input/output port 1 and the light input/output port 2 is suppressed to a lower level.

In addition, as described above, in the fifth embodiment, the input/output optical paths of the light input/output ports 1 and 2 are not parallel to each other as seen from the Z-axis direction, and the distances between the light input/output ports 1 and 2 and the anamorphic optical system 7 are different from each other. Therefore, in comparison to the above-described third embodiment, the interference between the light input/output ports 1 and 2 is short. Accordingly, it is possible to further easily reduce the space occupied by the input/output optical paths between the light input/output ports and the optical path manipulation unit by adjusting the angle θ1 between the optical fiber port groups 110 and 120.

As a result, according to the fifth embodiment, it is possible to obtain the same functions and effects as those of the above-described third embodiment and to easily increase the number of light input/output ports, and it is possible to further facilitate a decrease in size of the optical switch and a decrease in cost.

Next, an optical switch 60 according to a sixth embodiment will be described. In the above-described fifth embodiment, the anamorphic optical system 7 is configured to include the two anamorphic prisms 7a and 7b which are arranged so that the directions where the interval between two optical planes is narrowed are alternated. In the sixth embodiment, an anamorphic optical system 7A is configured to include four anamorphic prisms 7a, 7b, 7c, and 7d which are arranged so that the directions where the interval between two optical planes is narrowed are alternated.

Namely, the configurations between the wavelength dispersion element 8 and the optical path manipulation unit 5 in the sixth embodiment are the same as those of the third embodiment. In addition, the configurations of the light input/output ports 1 and 2 in the sixth embodiment are the same as those of the fifth embodiment. Therefore, hereinafter, the description of the configuration except for the anamorphic optical system 7A will not be presented by referring the same reference numerals as those of the third and fifth embodiments.

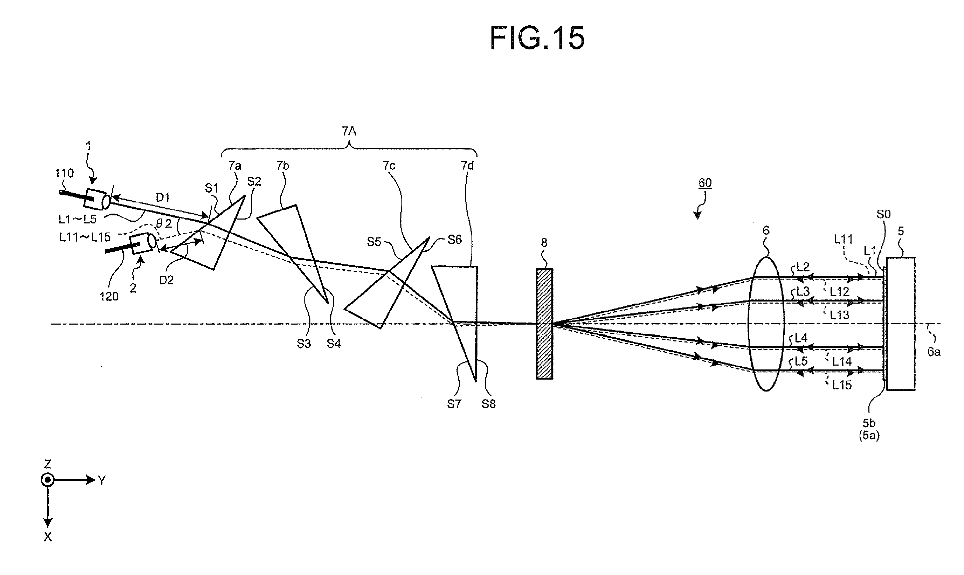

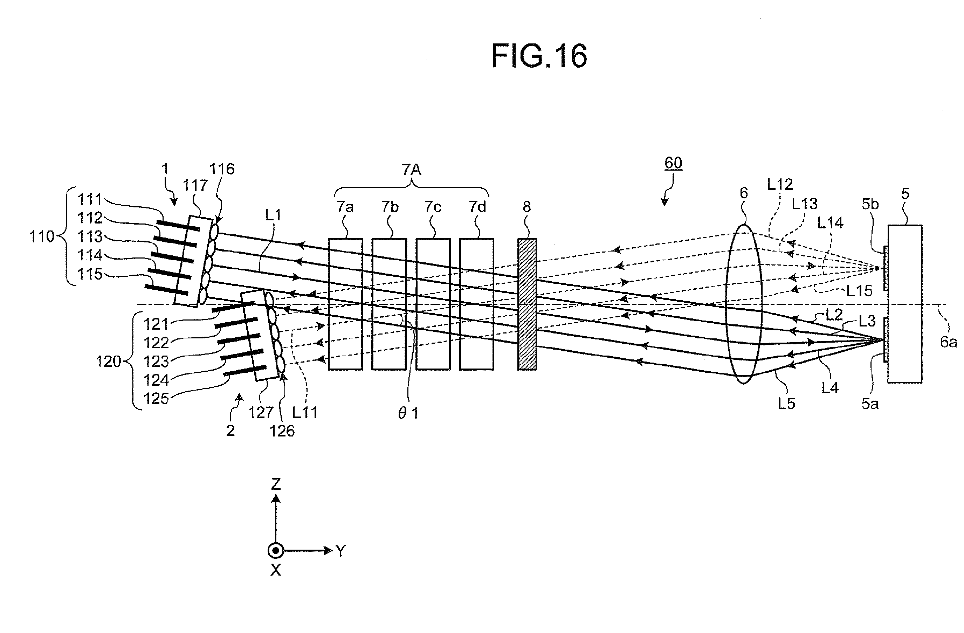

FIG. 15 is a schematic diagram illustrating a configuration example of the optical switch 60 according to the sixth embodiment of the present invention. In FIG. 15, the optical switch 60 according to the sixth embodiment is illustrated as seen from the positive direction in the Z axis direction of the XYZ coordinate system. FIG. 16 is a diagram illustrating the optical switch illustrated in FIG. 15 as seen from the positive direction in the X axis direction of the XYZ coordinate system. In the XYZ coordinate system of FIGS. 15 and 16, the X axis is set to the diffraction direction of the optical switch 60; the Y axis is set to the optical axis direction of the entire optical path; and the Z axis is set to the switching direction of the optical switch 60.

As illustrated in FIGS. 15 and 16, the optical switch 60 according to the sixth embodiment is configured so that the anamorphic optical system 7A disposed between the light input/output ports 1 and 2 and the condenser lens 6 includes the four anamorphic prisms 7a, 7b, 7c, and 7d, each of which has two facing optical planes and the directions where the interval between two optical planes is narrowed are alternated with respect to the input/output optical path.

As illustrated in FIG. 15, the interval-decreasing direction of the optical planes S1 and S2 of the anamorphic prism 7a is the upward direction in the drawing with respect to the input/output optical path. In addition, the interval-decreasing direction of the optical planes S3 and S4 of the anamorphic prism 7b is the downward direction in the drawing with respect to the input/output optical path. In addition, the interval-decreasing direction of the optical planes S5 and S6 of the anamorphic prism 7c is the upward direction in the drawing with respect to the input/output optical path. In addition, the interval-decreasing direction of the optical planes S7 and S8 of the anamorphic prism 7d is the downward direction in the drawing with respect to the input/output optical path. In this manner, the anamorphic optical system 7A in the sixth embodiment is configured to include the four anamorphic prisms 7a, 7b, 7c, and 7d which are arranged so that the directions where the interval between two facing optical planes is narrowed are alternated with respect to the input/output optical path.

Since the configuration except for the anamorphic optical system 7A is described in the third and fifth embodiments, hereinafter, the optical functions generated from the configuration of the sixth embodiment will be described.

The input/output optical paths of the light input/output ports 1 and 2 are the optical paths indicated by solid-line arrows and broken-line arrows of FIG. 15 as seen from the Z-axis direction. Namely, the input/output optical paths of the light input/output ports 1 and 2 are not parallel to each other and have an angle θ2 in the zones between the light input/output ports 1 and 2 and the anamorphic prism 7a. In addition, with respect to the input/output optical paths, as passing through the anamorphic prisms 7a, 7b, 7c, and 7d from the light input/output ports 1 and 2 toward the wavelength dispersion element 8, the angle between the input/output optical paths of the light input/output ports 1 and 2 is decreased, and the difference between light enlargement ratios of the anamorphic prisms is decreased.

In addition, it is preferable that the anamorphic prisms included in the anamorphic optical system 7A be arranged so that the directions where the interval between optical planes is narrowed are alternated.

In the sixth embodiment, although the angle $\theta2$ is increased to some degree, since the number of anamorphic prisms included in the anamorphic optical system 7A is large and the alternate arrangement is used, the influence caused by the size of the angle $\theta2$ can be suppressed.

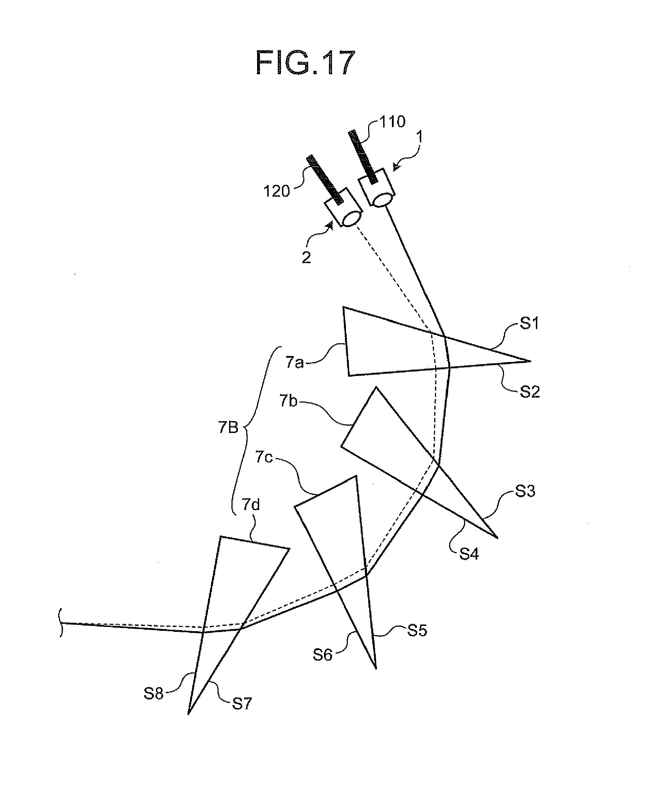

Table 1 listed below is a table for comparison of a change in enlargement ratio according to a difference in incident angle in the case of the arrangement (A) where the directions where the interval between optical planes is narrowed are alternated with respect to the input/output optical path and the arrangement (B) where the directions where the interval between optical planes is narrowed are the same with respect to the input/output optical path (the arrangement illustrated in FIG. 17) in the anamorphic optical system configured with four anamorphic prisms. In Table 1, "m$\alpha$" denotes the enlargement ratio in the case where the incidence angle on the first plane S1 of the anamorphic prism is small and corresponds to the enlargement ratio of the signal light from the light input/output port 1 in the sixth embodiment. In addition, "m$\beta$" denotes the enlargement ratio in the case where the incidence angle on the first plane S1 of the anamorphic prism is large and corresponds to the enlargement ratio of the signal light from the light input/output port 2 in the sixth embodiment.

Table 1

|   | m$\alpha$ | m$\beta$ |
|---|---|---|
| A | 18.4 | 19.45 |
| B | 18.4 | 21.2 |

As listed in Table 1, compared to the case of the arrangement (B), the difference in the enlargement ratio in the case where the incident angles are different is small in the case of the arrangement (A). Namely, Table 1 denotes that, in the case of the arrangement (A), when diameters of the beam spots at the time of incidence on the first plane S1 of the anamorphic prism are the same, the difference in the diameter of the light flux at the time of incidence on the condenser lens 6 is also decreased.

In addition, when the diameters of the light fluxes at the time of incidence on the condenser lens 6 are the same, the diameters of the beam spots on the surface S0 of the LCOS are the same. Therefore, compared to the case of the arrangement (B), with respect to the surface S0 of the LCOS, the difference in the short diameter of the beam spot caused by the incidence angle at the time of incidence on the first plane S1 of the anamorphic prism is decreased in the case of the arrangement (A). This denotes that, in the sixth embodiment employing the arrangement (A), a difference in performance between the light input/output port 1 and the light input/output port 2 can be suppressed.

In addition, since the sixth embodiment has all the features of the fifth embodiment, the effect according to the difference between the distances between the light input/output ports 1 and 2 and the anamorphic optical system 7A is also obtained. Namely, in the sixth embodiment, the distance between the light input/output port 1 and the anamorphic optical system 7A is allowed to be larger than the distance between the light input/output port 2 and the anamorphic optical system 7A, the difference in the long diameter of the beam spot between the light input/output port 1 and the light input/output port 2 on the first plane of the anamorphic prism 7a can be allowed to be small. In addition, since the anamorphic optical system 7A is configured to include the four anamorphic prisms 7a, 7b, 7c, and 7d which are arranged so that the directions where the interval between optical planes is narrowed are alternated, it is possible to obtain the synergistic effect that the beam spots of the light input/output port 1 and the light input/output port 2, of which difference in the long diameter of the beam spot is suppressed small can be guided to the condenser lens 6 in the state that the difference in enlargement ratio is suppressed.

Herein, the synergistic effect according to the configuration where the distance between the light input/output port 1 and the anamorphic optical system 7A is allowed to be longer than the distance between the light input/output port 2 and the anamorphic optical system 7A and the effect according to the configuration where the anamorphic optical system 7A is configured to include the four anamorphic prisms 7a, 7b, 7c, and 7d so that the directions where the interval between optical planes is narrowed are alternated will be described.

Table 2 (Case A) listed below is a table for listing insertion loss and deterioration in bandwidth as an optical switch in the case where an anamorphic optical system is configured with four anamorphic prisms which are arranged so that the directions where the interval between optical planes is narrowed are the same and the light input/output ports is arranged in the same distance from the anamorphic optical system. In addition, Table 3 (Case B) is a table for listing insertion loss and deterioration in bandwidth as an optical switch in the case where an anamorphic optical system is configured with four anamorphic prisms which are arranged so that the directions where the interval between optical planes is narrowed are the same and the distance between the input/output port of which incident angle on the anamorphic optical system is small and the anamorphic optical system is longer by 20 mm than the distance between the input/output port of which incident angle on the anamorphic optical system is large and the anamorphic optical system.

In addition, in Table 2 (Case A) and Table 3 (Case B), the deterioration in bandwidth denotes a degree of deterioration in bandwidth at the time of incidence of the signal light on the first plane of the anamorphic prism at an incident angle (corresponding to the incidence of the signal light from the light input/output port 1 in the sixth embodiment) smaller than a reference incident angle in comparison to the bandwidth at the time of incidence of the signal light on the first plane of the anamorphic prism at the reference incident angle (corresponding to the incidence of the signal light from the light input/output port 2 in the sixth embodiment).

Table 2

| Case A | |
| --- | --- |
| | $\alpha$ |
| Insertion loss [dB] | -0.81 |
| Deterioration in bandwidth [GHz] | -5.67 |

Table 3

| Case B | |
| --- | --- |
| | $\alpha$ |
| Insertion loss [dB] | -0.65 |
| Deterioration in bandwidth [GHz] | -0.14 |

As can be understood from the comparison of Table 2 (Case A) and Table 3 (Case B), the distance between the light input/output port and the anamorphic optical system is allowed to be long, so that the deterioration in bandwidth can be greatly compensated for. In addition, the insertion loss is also greatly compensated for.

Table 4 (Case C) listed below is a table for listing insertion loss and deterioration in bandwidth as an optical switch in the case where an anamorphic optical system is configured with four anamorphic prisms which are arranged so that the directions where the interval between optical planes is narrowed are alternated and the distance between the input/output port of which incident angle on the anamorphic optical system is small and the anamorphic optical system is longer by 3.5 mm than the distance between the input/output port of which incident angle on the anamorphic optical system is large and the anamorphic optical system.

Table 4

| Case C | |
| --- | --- |
| | $\alpha$ |
| Insertion loss [dB] | -0.08 |
| Deterioration in bandwidth [GHz] | -0.12 |

As can be understood from the comparison of Table 3 (Case B) and Table 4 (Case C), a combination of the anamorphic optical system configured with the four anamorphic prisms which are arranged so that the directions where the interval between optical planes is narrowed are alternated and the configuration where the distance between the light input/output port and the anamorphic optical system is allowed to be long is used, so that the deterioration in bandwidth and the insertion loss can be greatly compensated for. Namely, the optical switch 60 according to the sixth embodiment can obtain the effect of greatly compensating for the insertion loss as well as the effect of compensating for the deterioration in bandwidth, which is the effect of the optical switch 50 according to the fifth embodiment.

In addition, as can be understood from the comparison of Table 3 (Case B) and Table 4 (Case C), in Case B, the distance between the light input/output port and the anamorphic optical system is 20 mm, and in Case C, the distance between the light input/output port and the anamorphic optical system is 3.5 mm. However, in Case C, the deterioration in bandwidth can be more greatly compensated for. Namely, in the case of using a combination of the anamorphic optical system configured with four anamorphic prisms which are arranged so that the directions where the interval between optical planes is narrowed are alternated and the configuration where the distance between the light input/output port and the anamorphic optical system is allowed to be long, although the elongation distance is short, the performance is maintained in comparison to the case where only the distance between the light input/output port and the anamorphic optical system is allowed to be long.

Therefore, in the optical switch 60 according to the sixth embodiment, it is possible to obtain the effect of decreasing the size of the entire apparatus and the effect of greatly compensating for the deterioration in performance of the apparatus.

In addition, in the above-described first to sixth embodiments, optical switches having a plurality of the light input/output ports as a 1 x 4 optical switch including one input port (Com port) and four output ports are exemplified. However, the present invention is not limited to the embodiments. Namely, the number of light input/output ports included in the optical switch according to the present invention is not limited to five, but the number may be any plural number. For example, the light input/output ports of a 1xM optical switch where the number of input ports is "1" and the number of output ports is "M" may be used; and the light input/output ports of an N x 1 optical switch where the number of input ports is "N" and the number of output ports is "1" may be used. Alternatively, a combination thereof, namely, the light input/output ports of an N x M optical switch where the number of input ports is "N" and the number of output ports is "M" may be used. In this case, the number of the optical path switching units arranged in the optical path manipulation unit may be adjusted corresponding to the number of light input/output ports. In addition, each of the number of input ports M and the number of output ports N is an integer of 1 or more.

In addition, in the above-described first to sixth embodiments, light is input from the Com port in the light input/output port, and light is output from the other ports (optical fiber port and the like) excluding the Com port. However, the present invention is not limited to the embodiments. Namely, light may be input from the other ports excluding the Com port, and light may be output from the Com port.

In addition, in the above-described first to sixth embodiments, a 2-in-1 optical switch where two different optical switch functions are included in one apparatus and a 3-in-1 optical switch where three different optical switch functions are included in one apparatus are exemplified. However, the present invention is not limited to the embodiments. The number of light input/output port groups included in the optical switch according to the present invention is not particularly limited to two or three. Preferably, the number of light input/output port groups may be two or more. Namely, the optical switch according to the present invention may be a J-in-1 optical switch where different optical switch functions (including the wavelength selective switch functions) are included in one apparatus (J is an integer of 2 or more). For example, an optical switch or a wavelength selective switch where the above-described J light input/output ports are included in one apparatus may be configured.

In addition, in the above-described first to sixth embodiments, a plurality of the optical path switching units are configured with the LCOSs. However, the present invention is not limited thereto, but a plurality of the optical path switching units may be configured with MEMS mirrors or may be configured with DMDs (Digital Micromirror Devices).

In addition, in the above-described first to sixth embodiments, each of the ports in the light input/output ports is configured with an optical fiber. However, the present invention is not limited thereto, but each of the ports in the light input/output port may be configured with an optical waveguide such as a silica waveguide besides the optical fiber.

In addition, in the above-described first to sixth embodiments, the optical fiber ports in the same optical fiber port group are parallel to each other, and the optical fiber ports in the different optical fiber port groups are not parallel to each other. However, the present invention is not limited to the embodiments. Namely, according to arrangement of the lens system such as a collimating lens group, the input/output optical paths of the light input/output ports corresponding to the condenser lens are parallel to each other between the optical fiber ports in the same optical fiber port group and are not parallel to each other between the optical fiber ports in the different optical fiber port groups as seen from the direction perpendicular to the port arrangement direction. In this case, the arrangement of the ports in the port group is not particularly limited. For example, the optical fiber ports in the different optical fiber port groups may be parallel to each other. In addition, the optical fiber ports in the same optical fiber port group may not be parallel to each other.

In addition, in the above-described first to sixth embodiments, the different optical fiber port groups are installed in the light input/output ports. However, the present invention is not limited thereto, but the different light input/output port groups may assembled in a single light input/output port, or the port groups may be grouped in the single light input/output port according to the optical switch functions.

In addition, in the above-described first to sixth embodiments, the number of optical fiber ports is the same among the optical fiber port groups. However, the present invention is not limited thereto, but the number of optical fiber ports in the optical input/output port groups may be different among the port groups.

In addition, in the above-described first to third embodiments, the two different optical fiber port groups are not parallel to the optical axis of the condenser lens as seen from the direction (X-axis direction) perpendicular to the port arrangement direction. However, the present invention is not limited to the embodiments. Namely, when the optical input/output port groups included in the optical switch according to the present invention are not parallel to each other as seen from the X-axis direction, at least one of the port groups may be parallel to the optical axis of the condenser lens as seen the X-axis direction. In this case, at least one of the different light input/output ports may be arranged so as to be inclined with respect to the optical axis of the condenser lens.

In addition, in the above-described third embodiment, two different optical fiber port groups are not parallel to the optical axis of the condenser lens as seen from the port arrangement direction. However, the present invention is not limited to the embodiment. Namely, when the optical input/output port groups included in the optical switch according to the present invention are not parallel to each other as seen from the X-axis direction, at least one of the port groups may be parallel to the optical axis of the condenser lens as seen from the port arrangement direction. Particularly, in the case where the entire port groups are parallel to the optical axis of the condenser lens as seen from the port arrangement direction, phase modulation in a wavelength dispersion direction (X-axis direction) may be appropriately performed on the light from each of the optical path switching units in order to appropriately switch the optical paths in the optical switch operation.

In addition, in the above-described first and second embodiments, two different light input/output ports are arranged in one row along the port arrangement direction, and in the above-described third and fourth embodiments, two or three different light input/output ports are arranged in two or three rows along the port arrangement direction. However, the present invention is not limited to the embodiments. For example, the number of light input/output ports arranged in one row along the port arrangement direction may be 3 or more. In addition, the number of light input/output ports arranged in two rows along the port arrangement direction may be 3 or more, and the number of light input/output ports arranged in three rows along the port arrangement direction may be 4 or more. In addition, the light input/output ports may be arranged in three or more rows along the port arrangement direction, and a portion of the light input/output ports or the substantially entire thereof may be arranged along the X-axis direction so as to overlap with the direction (X-axis direction) perpendicular to the port arrangement direction. Namely, at least a portion of the different light input/output ports may be arranged along the port arrangement direction or may be arranged along the X-axis direction. In addition, the number of light input/output ports arranged in the port arrangement direction, the number of light input/output ports arranged in the X-axis direction, and the number of rows of the light input/output ports arranged along the port arrangement direction are not particularly limited in the present invention.

In addition, in the above-described first to sixth embodiments, the wavelength dispersion element is arranged in the vicinity of the intersection position of each of the input/output optical paths of the different light input/output ports. However, the present invention is not limited thereto, but the wavelength dispersion element may be arranged at an appropriate position by considering the separation distance between the image points of the lights on the optical path manipulation unit and optical characteristics of the condenser lens and the like.

In addition, in the above-described first to sixth embodiments, the condenser lens having a single optical axis is used. However, the present invention is not limited thereto, but a condenser lens system may be configured with a composite lens system using a plurality of lenses. The condenser lens system may have a plurality of optical axes.

In addition, in the above-described first to sixth embodiments, the wavelength dispersion element is configured by using a transmission type diffraction grating. However, the present invention is not limited thereto, but the wavelength dispersion element may be configured by using a reflection type diffraction grating, or the wavelength dispersion element may be configured by using other light dispersion elements such as a dispersion prism. In addition, in the case where the wavelength dispersion element is configured by using a transmission type diffraction grating, since there is no need to greatly bend the optical path, elements constituting the optical switch may be easily arranged without unintended interference with the optical path.

In addition, in the above-described first to sixth embodiments, the optical fiber port at the center of the optical fiber port group is set as the Com port so that light is input from the Com port, and the other optical fiber ports are set as the output ports. However, the present invention is not limited to the embodiments. Namely, in the present invention, the position of the Com port in the light input/output port group is not particularly limited.

In addition, in the above-described first to sixth embodiments, a plurality of the LCOSs which are divided according to the wavelength of the light as an object of optical path manipulation (more specifically, according to the optical fiber port) are installed in the optical path manipulation unit. However, the present invention is not limited to the embodiments. Namely, a single LCOS may be installed in the optical path manipulation unit, and the single LCOS may be partitioned according to the wavelength of the light as an object of optical path manipulation (according to the port). In this case, different optical path switching units corresponding to the light input/output ports may be configured with a plurality of partitioned LCOS portions.

In addition, in the above-described first to sixth embodiments, the optical switch including the wavelength dispersion element 8 which disperses the input light according to the wavelength is exemplified. However, the present invention is not limited to the embodiments. Namely, an optical switch according to the present invention may not include the wavelength dispersion element 8, and the optical switch may include appropriately optical elements such as light input/output ports having light input ports and light output ports such as optical fiber ports, an optical path manipulation unit having a single optical path switching unit (for example, an LCOS) corresponding to each of the light input/output ports, a condenser lens, and optical elements such as an anamorphic optical system.

In addition, the present invention is not limited to the above-described embodiments. Appropriate combinations of the components of the above-described embodiments are included in the present invention. For example, the row arrangement of the light input/output ports in the optical switch according to the third and fourth embodiments is applied to the optical switch according to the second embodiment, so that the light input/output ports in the optical switch having an anamorphic optical system using a cylindrical lens are arranged in plural rows according to the port arrangement. Other embodiments, examples, operating techniques, and the like configured based on the above-described embodiments by the ordinarily skilled are included in the present invention.

**Claims**

1. An optical switch (10) comprising:

   a plurality of light input/output ports (1,2), each of which has a port group (110,120) of inputting or outputting a light;
   an optical path manipulation unit (5) which has a plurality of optical path switching units (5a,5b,5c) of switching an optical path of a light input from an input port in the port group to an optical path toward an output port in the same port group according to each of the light input/output ports; and
   a condenser lens (6) which condenses light input from the plurality of light input/output ports on the plurality of optical path switching units corresponding to the port groups and optically couples light input from the plurality of optical path switching units with the plurality of light input/output ports corresponding to the port groups,
   wherein the input/output optical paths of the plurality of light input/output ports with respect to the condenser lens are parallel to each other between the ports in the same port group and are not parallel to each other between the ports in the different port groups as seen from a direction perpendicular to an arrangement direction of optical waveguides which are the ports in the port groups.

2. The optical switch according to claim 1, wherein the condenser lens has a single optical axis.

3. The optical switch according to claim 2, wherein the condenser lens condenses light at least in a plane parallel to the arrangement direction.

4. The optical switch according to claim 3, further comprising an anamorphic optical system (7) which shapes beam shapes of the lights input from the plurality of light input/output ports to be in an elliptical shape.

5. The optical switch according to claims 1 to 3, wherein at least a portion of the plurality of light input/output ports is arranged along the arrangement direction.

6. The optical switch according to claims 1 to 3, wherein at least a portion of the plurality of light input/output ports is arranged along the direction perpendicular to the arrangement direction.

7. The optical switch according to claim 4, wherein the input/output optical paths of the plurality of light input/output ports with respect to the anamorphic optical system are not parallel to each other between the ports in the different port groups as seen from the arrangement direction.

8. The optical switch according to claim 3, wherein the ports between the different port groups in the plurality of light input/output ports has an angle on at least one of a plane parallel to the arrangement direction and a plane perpendicular to the arrangement direction.

9. The optical switch according to claim 4, further comprising:

   a first cylindrical lens (27) which condenses light input from the plurality of light input/output ports in a plane perpendicular to the arrangement direction; and
   a second cylindrical lens (28) which condenses light input from the condenser lens toward the optical path manipulation unit in the plane perpendicular to the arrangement direction,
   wherein the condenser lens is a cylindrical lens (26) which condenses light in a plane parallel to the arrangement direction, and
   the first cylindrical lens, the second cylindrical lens, and the condenser lens constitute an anamorphic optical system of which beam shapes of the lights input from the plurality of light input/output ports to be in an elliptical shape.

10. The optical switch according to claim 7, wherein the anamorphic optical system is configured with an anamorphic prism (7a,7b).

11. The optical switch according to claim 10, wherein at least a portion of the plurality of light input/output ports has different optical distances from the anamorphic optical system.

12. The optical switch according to claim 11, wherein, with respect to the distances from the plurality of light input/output ports to the anamorphic optical system, the distance of the light input/output port of which incident angle to an incident plane of the anamorphic prism is small among the input/output optical paths incident on the anamorphic optical system is large.

13. The optical switch according to claim 10, wherein the anamorphic optical system is configured to include two or more anamorphic prisms, each of which has two facing optical planes and of which directions where the interval between two optical planes is narrowed are arranged to be alternated.

14. The optical switch according to claim 13, wherein the anamorphic optical system is configured to include four anamorphic prisms of which directions where the interval between two optical planes is narrowed are arranged alternated.

15. The optical switch according to any one of claims 11 to 14, wherein the condenser lens is configured to include a first cylindrical lens which condenses light in a plane perpendicular to the arrangement direction and a second cylindrical lens which condenses light in a plane parallel to the arrangement direction.

16. The optical switch according to claim 3, wherein at least one of the plurality of light input/output ports is inclined with respect to an optical axis of the condenser lens.

17. The optical switch according to claim 16, wherein the optical paths of the light input from two or more different port groups in the plurality of light input/output ports intersect each other in the vicinity of a focal point of the condenser lens.

18. The optical switch according to claim 3, further comprising a wavelength dispersion element (8) which disperses the light input from the plurality of light input/output ports according to the wavelength.

19. The optical switch according to claim 18, wherein a wavelength dispersion direction of the wavelength dispersion element is substantially perpendicular to the arrangement direction.

FIG.1

L1
L11
L12
L13
L14
L15
L2
L3
L4
L5
5
6a
5b
(5a)
6
10
8
7
7b
7a
L1~L5
L11~L15
1(2)
Y
Z
X

FIG.2

# FIG.3

# FIG.4

EP 2 706 389 A2

# FIG.5

EP 2 706 389 A2

# FIG.6

EP 2 706 389 A2

FIG.7

EP 2 706 389 A2

FIG.8

EP 2 706 389 A2

# FIG.9

EP 2 706 389 A2

# FIG.10

# FIG.11

EP 2 706 389 A2

# FIG.12

EP 2 706 389 A2

# FIG.13

# FIG.14

# FIG.15

FIG.16

# FIG.17

**EP 2 706 389 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011065023 A

- US 7769255 B